# FASCICULE DE BREVET EUROPEEN

(11) **EP 4 268 427 B1**
(45) Date de publication et mention de la délivrance du brevet: **28.01.2026**
(21) Numéro de dépôt: 21848170.3
(22) Date de dépôt: 10.12.2021
(51) Int. Cl.: H04L 12/46, H04L 45/50, H04L 45/586, H04L 45/00

(54) **PROCEDES DE COMMUNICATION, REFLECTEUR DE ROUTES, HOTE ET SYSTEME INFORMATIQUE POUR LA MISE EN OEUVRE DE TELS PROCEDES**
KOMMUNIKATIONSVERFAHREN, ROUTENREFLEKTOR, HOST UND COMPUTERSYSTEM ZUR IMPLEMENTIERUNG SOLCHER VERFAHREN
COMMUNICATION METHODS, ROUTE REFLECTOR, HOST AND COMPUTER SYSTEM FOR IMPLEMENTING SUCH METHODS

(30) Priorité: 23.12.2020 FR 2014053
(43) Date de publication de la demande: 01.11.2023
(73) Titulaire: Orange, 92130 Issy-les-Moulineaux (FR)
(72) Inventeur: LEMOINE, Benoît, 92326 CHÂTILLON CEDEX (FR)
(74) Mandataire: Cabinet Beau de Loménie
(86) Numéro de dépôt international: PCT/FR2021/052276
(87) Numéro de publication internationale: WO 2022/136763

(56) Documents cités:
- EP-A1- 3 745 658
- WO-A1-2019/134067
- US-A1- 2017 195 220

## Description

### Technique antérieure

La présente invention appartient au domaine général des télécommunications. Elle concerne plus particulièrement des procédés de communication mis en œuvre par des entités appartenant à un système informatique implémentant un réseau local virtuel de commutation, ainsi que les entités et le système informatique en question. L'invention trouve une application particulièrement avantageuse, bien que nullement limitative, dans le cadre d'un centre de données de petite ou moyenne taille, soit donc sensiblement d'une centaine de machines au maximum.

La technologie de virtualisation informatique est aujourd'hui bien connue. Dans son principal général, elle consiste à créer et exécuter, sur une plateforme de virtualisation (couramment appelée « machine hôte »), une ou plusieurs représentations virtuelles d'un ordinateur ou de ses différentes ressources, comme par exemple un système d'exploitation, un serveur, un bureau, un système de stockage, un réseau, etc. Ces ressources simulées sont en tous points identiques à leurs versions physiques localisées côté client.

Une telle plateforme de virtualisation peut par exemple comporter une pluralité de couches, dont notamment :
- une couche de virtualisation ou hyperviseur, et
- une couche d'une ou plusieurs machines virtuelles, chaque machine virtuelle exécutant une instance de système d'exploitation unique, appelée système d'exploitation invité, et fonctionnant indépendamment des autres machines virtuelles de la plateforme de virtualisation.
Le déploiement automatisé des machines virtuelles sur la couche de virtualisation est assuré par un gestionnaire de machine virtuelle (encore dite « Virtual Machine Manager » en anglais).

Il est à noter que la technologie de virtualisation ne se limite pas à la mise en œuvre de machines virtuelles mais concerne également, de manière connue en soi, la mise en œuvre d'ensembles de containers (encore dits « pods » anglais).

En outre, la technologie de virtualisation peut se décliner selon différents types, comme par exemple la virtualisation de serveurs et de réseau aujourd'hui de plus en plus utilisée. C'est notamment le cas d'une part toujours plus importante d'entreprises cherchant à concentrer leurs ressources informatiques dans des centres de données (encore dits « datacenters » en anglais) et ainsi optimiser leurs capacités virtuelles de calcul/traitement, encore connue sous l'appellation « cloud computing » en anglais.

Aussi, pour accompagner le développement de la technologie de virtualisation de serveurs et de réseau, les opérateurs de télécommunication ont fait évoluer leurs pratiques. Plus particulièrement, ces opérateurs utilisaient jusque-là des équipements de télécommunication physiques, basés sur des processeurs spécialisés ASIC (acronyme de l'expression anglaise « Application Specific Integrated Circuit » ), et physiquement connectés à des réseaux privés virtuels (encore dits « Virtual Private Networks », ou « VPN », en anglais) par des interfaces dédiées sur des routeurs IP/MPLS (« IP » pour « Internet Protocol » et « MPLS » pour « Multi Label Protocol Switching » en anglais) mettant en œuvre ces VPNs.

Dorénavant, lesdits opérateurs réalisent des développements permettant de mettre en œuvre des services de télécommunication basés sur des fonctions réseau virtuelles (encore dites « Virtual Network Functions », ou « VNF », en anglais), qui correspondent plus précisément à des composants logiciels déployés sur des machines virtuelles ou sur des containers dans un ensemble de serveurs informatiques virtualisés. Il s'agit par exemple de fonctions réseau virtuelles élémentaires telles que des ponts Ethernet virtuels (exemples : ponts Linux, ou bien switches Ethernet virtuels comme par exemple les switches OpenVSwitch) ou bien encore des fonctions réseau virtuelles plus élaborées comme des passerelles de réseau mobile (exemples : Packet Data Network Gateway pour les réseaux mobiles 4G ou bien User Plane Function pour les réseaux mobiles 5G).

Pour raccorder sur un même réseau de commutation Ethernet VLAN (acronyme de l'expression anglaise « Virtual Local Area Network »), établi à travers un centre de données, des interfaces Ethernet virtuelles de VNFs définies sur plusieurs VPNs de réseaux IP/MPLS, les solutions déployées jusqu'à aujourd'hui ont pour point commun de s'appuyer sur une architecture informatique mettant en œuvre, dans chaque serveur du centre de données, un routeur, connu sous le nom de routeur « PE » (acronyme de l'expression anglaise « Provider Edge »), qui permet de raccorder une ou plusieurs machines virtuelles, encore dites hôtes « CE » (acronyme de l'expression anglaise « Customer Edge »), aux VPNs en question.

Une telle architecture informatique (association PE/CE dans un serveur) est en outre utile pour répondre à une problématique consistant à pouvoir retrouver à quel VPN appartient un hôte CE annonçant des routes (i.e. fournissant des informations de routage). Il s'agit là d'une problématique considérée comme d'importance pour la virtualisation de serveurs et de réseau, puisque de la capacité à répondre à celle-ci dépend en définitive la capacité à déterminer à quels autres hôtes CE raccordés au réseau Ethernet VLAN d'un centre de données, mais pouvant être raccordés à d'autres VPNs que celui auquel appartient l'hôte annonçant des routes, il convient de relayer les informations de routage en question.

Aussi, pour répondre à cette problématique de propagation des informations de routage, il est habituel de laisser un hôte CE annoncer ses routes à un routeur virtuel instancié par un VPN sur le routeur PE auquel ledit hôte CE est rattaché. Autrement dit, c'est au travers des routeurs PE rattachés aux hôtes CE que s'effectue une propagation appropriée des informations de routage.

Il convient de noter que les échanges d'informations de routage entre routeurs PE s'effectue de manière conventionnelle au moyen d'un dispositif IP/MPLS connu sous le nom de réflecteur de routes « RR » (acronyme de l'expression anglaise « Route Reflector ») et défini dans le document RFC 4456 publié par l'IETF en Avril 2006. Plus particulièrement, un tel réflecteur de route RR permet, de manière connue en soi, à des routeurs PE d'échanger entre eux les informations de routage qui leur ont été communiquées. Ces échanges, via un réflecteur de routes RR, s'appuient notamment sur l'extension « MP » (acronyme de l'expression anglaise « Multi Protocol ») du protocole « BGP » (acronyme de l'expression anglaise « Border Gateway Protocol »).

Le fait que la propagation des informations de routage soit dépendante des routeurs PE présente toutefois des désavantages. En effet, pour transporter de façon isolée (i.e. dans un tunnel de VPN) le trafic en provenance d'un hôte CE source vers un hôte CE destination, le routeur PE source associé audit hôte CE source doit identifier le routeur PE destination associé audit hôte CE destination. Pour ce faire, une table de commutation associant les adresses de chaque hôte CE distant et du routeur PE distant attaché à ce dernier est implémentée au niveau du routeur PE source. Il résulte de ces considérations que le routeur PE source doit mettre à jour ladite table de commutation à chaque fois qu'un hôte distant est identifié. Une telle mise en œuvre est complexe d'implémentation, rendant ainsi difficile la garantie de performances de débit de transfert ainsi que la garantie d'un fonctionnement sans défaut. En outre, cette complexité induit elle-même un coût d'implémentation important qui se révèle être incompatible avec la tendance actuelle visant à privilégier la concentration de ressources informatiques dans des centres de données.

Le document US 2017/195220 A1 décrit une méthode de résolution d'une adresse IP/MAC.

### Exposé de l'invention

La présente invention a pour objectif de remédier à tout ou partie des inconvénients de l'art antérieur, notamment ceux exposés ci-avant, en proposant une solution qui permette de déterminer à quel VPN appartient un hôte CE annonçant des routes, de manière plus simple et moins onéreuse que les solutions de l'état de la technique, de sorte à pouvoir garantir des performances de débit de transfert ainsi que de fonctionnement sans défaut mais également à faciliter la détermination d'hôtes CE vers lesquels il convient de relayer des routes ainsi annoncées.

A cet effet, et selon un premier aspect, l'invention concerne un procédé de communication mis en œuvre par un réflecteur de routes appartenant à un système informatique implémentant un réseau local virtuel de commutation auquel est connecté ledit réflecteur de routes, ledit système informatique comportant en outre au moins un serveur dans lequel sont connectés un proxy virtuel de commutation multiprotocole avec étiquette et un hôte, ledit proxy virtuel étant connecté au réseau local ainsi que rattaché à un réseau privé virtuel de communication. Ledit procédé comporte, pour chaque hôte d'un serveur, un ensemble d'étapes de :
- mémorisation d'un identifiant dudit réseau privé en association avec une adresse matérielle de l'hôte,
- réception, en provenance du proxy connecté audit hôte, d'une notification comportant une adresse IP de l'hôte, dite « adresse de saut, associée à ladite adresse matérielle,
- si, avant la réception de ladite notification, une ou plusieurs autres adresses IP ont été mémorisées en association avec une ou plusieurs adresses matérielles d'hôtes par le réflecteur de routes, vérification d'une correspondance entre ladite adresse de saut et ladite ou lesdites autres adresses IP,
- si la vérification de correspondance est négative ou si aucune autre adresse IP n'a été mémorisée par le réflecteur de routes avant la réception de ladite notification, mémorisation de ladite adresse de saut en association avec l'adresse matérielle de l'hôte,
- réception, en provenance de l'hôte, d'un message d'annonce comportant les routes accessibles via ladite adresse de saut,
- mémorisation desdites routes annoncées en association avec l'identifiant dudit réseau privé, l'adresse matérielle de l'hôte et ladite adresse de saut.

De manière fondamentale, le premier procédé selon l'invention se distingue de l'état de la technique en ce que les fonctions routeurs PE dans des serveurs informatiques sont ici remplacées par des fonctions proxy qui ne jouent pas de rôles particuliers dans l'apprentissage des routes, mais aussi surtout en ce que le réflecteur de routes est directement raccordé aux hôtes. C'est donc le réflecteur de routes qui a en charge la mémorisation des données qui permettent d'identifier à quel VPN appartient un hôte.

Il est à noter que l'invention trouve une application particulièrement avantageuse, bien que nullement limitative, dans le cadre d'un système informatique implémenté dans un centre de données de petite ou moyenne taille, soit donc sensiblement d'une centaine de machines au maximum, de manière à ce que des commutateurs Ethernet reliant les serveurs à l'intérieur du système informatique soient en mesure de traiter l'intégralité des adresses Ethernet exposées sur le réseau local virtuel de commutation.

Dans des modes particuliers de mise en œuvre, le procédé de communication peut comporter en outre l'une ou plusieurs des caractéristiques suivantes, prises isolément ou selon toutes les combinaisons techniquement possibles.

Dans des modes particuliers de mise en œuvre, le système informatique comporte un serveur dans lequel sont connectés un proxy virtuel, dit « proxy destination », et un hôte, dit « hôte destination », ainsi qu'également une passerelle connectée au réseau local, ledit procédé comportant en outre, avant l'exécution dudit ensemble d'étapes, des étapes de :
- réception, en provenance de ladite passerelle, d'un message d'annonce comportant un identifiant, dit « identifiant tunnel », ainsi que les routes accessibles, au moyen dudit identifiant tunnel et dans le réseau privé, via une adresse IP de ladite passerelle,
- mémorisation desdites routes annoncées en association avec l'identifiant dudit réseau privé, ledit identifiant tunnel et ladite adresse IP de la passerelle,
ledit ensemble d'étapes associé à l'hôte destination comportant également des étapes de :
- transmission de l'identifiant tunnel à un système de gestion de virtualisation appartenant au système informatique,
- transmission à ladite passerelle d'un message d'annonce comportant les routes accessibles, au moyen dudit identifiant tunnel et dans le réseau privé, via ladite adresse de saut.

De telles dispositions permettent, grâce à l'ajout de ladite passerelle dans le système informatique, de raccorder les VPNs d'un centre de données dans lequel serait implémenté ledit système informatique à des VPNs IP/MPLS extérieurs audit centre de données.

Ces dispositions permettent donc aussi de mettre en œuvre des communications rentrantes dans ledit système informatique via des tunnels VPN établis de la passerelle vers l'hôte destination.

Dans des modes particuliers de mise en œuvre, le système informatique comporte un serveur dans lequel sont connectés un proxy virtuel, dit « proxy source », et un hôte, dit « hôte source », ainsi qu'également une passerelle connectée au réseau local, ledit procédé comportant en outre, avant l'exécution dudit ensemble d'étapes, des étapes de :
- réception, en provenance de ladite passerelle, d'un message d'annonce comportant un identifiant, dit « identifiant tunnel », ainsi que les routes accessibles, au moyen dudit identifiant tunnel et dans le réseau privé, via une adresse IP de ladite passerelle,
- mémorisation desdites routes annoncées en association avec l'identifiant dudit réseau privé, ledit identifiant tunnel et ladite adresse IP de la passerelle,
ledit ensemble d'étapes associé à l'hôte source comportant également des étapes de :
- transmission de l'identifiant tunnel à un système de gestion de virtualisation appartenant au système informatique,
- transmission à l'hôte source d'un message d'annonce comportant les routes accessibles, dans le réseau privé, via l'adresse IP de la passerelle,

Ces dispositions permettent ici de mettre en œuvre des communications sortantes dudit système informatique via des tunnels VPN établis de l'hôte source vers la passerelle.

Dans des modes particuliers de mise en œuvre, le système informatique comporte un premier serveur dans lequel sont connectés un proxy virtuel, dit « proxy source » (PR-S) et un hôte, dit « hôte source », ainsi qu'un deuxième serveur dans lequel sont connectés un proxy virtuel, dit « proxy destination », et un hôte, dit « hôte destination », lesdits proxys source et destination étant rattachés à un même réseau privé virtuel de communication, ledit procédé comportant une exécution dudit ensemble d'étapes pour chacun des hôtes desdits serveurs, et, après que ledit ensemble d'étapes ait été exécuté pour l'hôte destination, une étape de transmission à l'hôte source d'un message d'annonce comportant les routes accessibles via l'adresse de saut de l'hôte destination.

Selon un deuxième aspect, l'invention concerne un procédé de communication mis en œuvre par un hôte appartenant à un système informatique implémentant un réseau local virtuel de commutation, ledit système informatique comportant en outre un réflecteur de routes connecté audit réseau local, un serveur dans lequel sont connectés un proxy virtuel de commutation multiprotocole avec étiquette et ledit hôte, ledit proxy virtuel étant connecté au réseau local ainsi que rattaché à un réseau privé virtuel de communication. Ledit procédé comporte des étapes de :
- transmission gratuite au proxy d'une notification comportant une adresse matérielle de l'hôte ainsi qu'adresse IP de l'hôte, dite « adresse de saut », associée à ladite adresse matérielle,
- transmission au réflecteur de routes d'un message d'annonce comportant les routes accessibles via ladite adresse saut.

Ledit procédé de communication mis en œuvre par un hôte hérite des mêmes avantages que ceux mentionnés ci-avant en référence audit procédé de communication mis en œuvre, par le réflecteur de routes.

On note que la transmission gratuite d'une notification comportant une adresse matérielle s'effectue conformément à un protocole de résolution d'adresse « ARP » (acronyme de l'expression anglaise « Address Resolution Protocol ») dans le cas d'adresses IPv4, ou bien conformément à un protocole de résolution d'adresse « ICMPv6 » (acronyme de l'expression anglaise « Internet Control Message Protocol version 6 ») dans le cas d'adresses IPv6, tous deux connus de l'homme de l'art, pour offrir la possibilité à un hôte IP d'envoyer une notification à destination de l'ensemble des hôtes IP sur le réseau local de commutation VLAN sans avoir reçu au préalable de requête de résolution d'adresse.

Dans des modes particuliers de mise en œuvre, le procédé de communication mis en œuvre par un hôte peut comporter en outre l'une ou plusieurs des caractéristiques suivantes, prises isolément ou selon toutes les combinaisons techniquement possibles.

Dans des modes particuliers de mise en œuvre, le système informatique comporte un serveur dans lequel sont connectés un proxy virtuel, dit « proxy source », et un hôte, dit « hôte source », ainsi qu'également une passerelle connectée au réseau local, ledit procédé étant mis en œuvre par ledit hôte source et comportant en outre une étape de réception, en provenance du réflecteur de routes, d'un message d'annonce comportant les routes accessibles, dans le réseau privé, via l'adresse IP de la passerelle,

Dans des modes particuliers de mise en œuvre, le système informatique comporte un premier serveur dans lequel sont connectés un proxy virtuel, dit « proxy source » et un hôte, dit « hôte source », ainsi qu'un deuxième serveur dans lequel sont connectés un proxy virtuel, dit « proxy destination », et un hôte, dit « hôte destination », lesdits proxys source et destination étant rattachés à un même réseau privé virtuel de communication, ledit procédé étant mis en œuvre par ledit hôte source et comportant une étape de réception, en provenance du réflecteur de routes, d'un message d'annonce comportant les routes accessibles via l'adresse de saut de l'hôte destination.

Selon un troisième aspect, l'invention concerne un programme d'ordinateur comportant des instructions pour la mise en œuvre d'un procédé de communication mis en œuvre par un réflecteur de routes selon l'invention ou d'un procédé de communication mis en œuvre par un hôte selon l'invention lorsque ledit programme d'ordinateur est exécuté par un ordinateur.

Ce programme peut utiliser n'importe quel langage de programmation, et être sous la forme de code source, code objet, ou de code intermédiaire entre code source et code objet, tel que dans une forme partiellement compliée, ou dans n'importe quelle autre forme souhaitable.

Selon un quatrième aspect, l'invention concerne un support d'informations ou d'enregistrement lisible par un ordinateur sur lequel est enregistré un programme d'ordinateur selon l'invention.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un cinquième aspect, l'invention concerne un réflecteur de routes comportant des moyens configurés pour mettre en œuvre un procédé de communication selon l'invention.

Selon un sixième aspect, l'invention concerne un hôte comportant des moyens configurés pour mettre en œuvre un procédé de communication selon l'invention.

Selon un septième aspect, l'invention concerne un système comportant un réflecteur de routes selon l'invention et au moins un serveur dans lequel sont connectés un proxy virtuel de commutation multiprotocole avec étiquette et un hôte selon l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente schématiquement, dans son environnement, un mode particulier de réalisation d'un système informatique selon l'invention ;
[Fig. 2] la figure 2 représente schématiquement un exemple d'architecture matérielle d'un réflecteur de routes selon l'invention appartenant au système informatique de la figure 1 ;
[Fig. 3] la figure 3 représente schématiquement un exemple d'architecture matérielle d'un hôte selon l'invention, dit « hôte source », appartenant au système informatique de la figure 1 ;
[Fig. 4] la figure 4 représente schématiquement un exemple d'architecture matérielle d'un hôte selon l'invention, dit « hôte destination », appartenant au système informatique de la figure 1 ;
[Fig. 5] la figure 5 représente, sous forme d'ordinogramme, un mode particulier d'un procédé de communication, dit « procédé général », mis en œuvre par le système informatique de la figure 1, ledit procédé général englobant des premier, deuxième et troisième procédés selon l'invention et respectivement mis en œuvre par les réflecteur de routes, hôte source et hôte destination des figures 2, 3 et 4 ;
[Fig. 6] la figure 6 représente schématiquement une trame Ethernet transmise entre l'hôte source de la figure 3 et l'hôte destination de la figure 4 au cours de la mise en œuvre du procédé général de la figure 5 ;
[Fig. 7] la figure 7 représente schématiquement, dans son environnement, un autre mode particulier de réalisation d'un système informatique selon l'invention ;
[Fig. 8] la figure 8 représente, sous forme d'ordinogramme, un mode particulier, dit « mode de communication rentrant », du procédé général mis en œuvre par le système informatique SI_BIS de la figure 7 ;
[Fig. 9] la figure 9 représente schématiquement une trame Ethernet transmise par une passerelle réseau vers l'hôte destination de la figure 4 lors de la mise en œuvre du procédé de la figure 8 ;
[Fig. 10] la figure 10 représente, sous forme d'ordinogramme, un mode particulier, dit « mode de communication sortant », du procédé général mis en œuvre par le système informatique SI_BIS de la figure 7 ;
[Fig. 11] la figure 11 représente schématiquement une trame Ethernet transmise par l'hôte source de la figure 3 vers une passerelle réseau lors de la mise en œuvre du procédé de la figure 10.

### Description des modes de réalisation

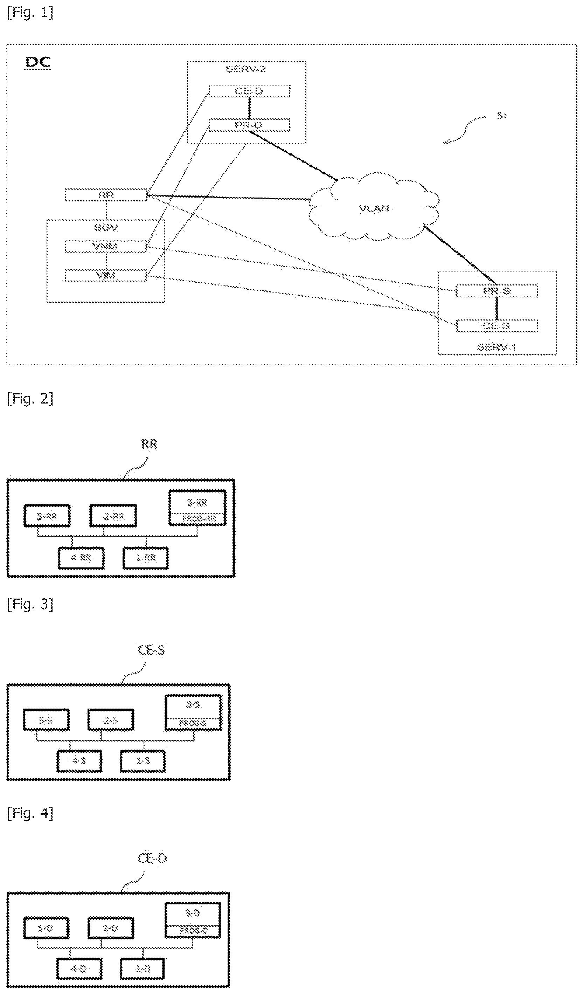

La figure 1 représente schématiquement, dans son environnement, un mode particulier de réalisation d'un système informatique SI selon l'invention,

Dans le mode de réalisation de la figure 1, le système informatique SI est agencé dans un centre de données DC et implémente un réseau de commutation Ethernet correspondant à un réseau local virtuel de commutation VLAN. Un tel réseau virtuel VLAN correspond, de manière connue en soi et en référence à la nomenclature du modèle OSI (acronyme de l'expression anglaise « Open Systems Interconnection »), à un réseau de niveau 2 permettant de segmenter le trafic échangé sur ce réseau en fonction d'adresses matérielles, dites « adresses MAC » (acronyme de l'expression anglais « Media Access Control »), d'appareils détenus par des utilisateurs,

Le système informatique SI est configuré pour mettre en œuvre une virtualisation de serveurs interconnectés via le réseau virtuel VLAN. A cet effet, et tel qu'illustré dans le mode de réalisation de la figure 1, le système informatique SI comporte un système de gestion de virtualisation SGV qui comprend, de manière connue en soi :
- un dispositif de gestion du réseau local dit « dispositif VNM » (acronyme de l'expression anglaise « Virtual Network Manager »). Il s'agit d'une entité configurée pour gérer la création d'interfaces virtuelles sur des éléments de commutation virtuels (logiciels dans le système d'exploitation, ou matériels dans les cartes d'interfaces réseau) de serveurs informatiques :
- un dispositif de gestion d'infrastructures virtuelles dit « dispositif VIM » (acronyme de l'expression anglaise « Virtual Infrastructure Manager »). Il s'agit d'une entité configurée pour gérer la création de machines virtuelles ou d'ensembles de containers dans un serveur informatique.

Dans le présent mode de réalisation, le système informatique SI comporte également deux serveurs informatiques, à savoir :
- un premier serveur SERV-1 dans lequel sont connectés un proxy virtuel de commutation multiprotocole ave étiquette, dit « proxy source » PR-S, et un hôte dit « hôte source » CE-S.
   Ledit proxy source PR-S est un proxy utilisant le mécanisme de transport MPLS (acronyme de l'expression anglaise « Multi Label Protocol Switching ») ;
- un deuxième serveur SERV-2 dans lequel sont connectés un proxy virtuel MPLS, dit « proxy destination » PR-D, et un hôte, dit « hôte destination » CE-D. Ledit proxy destination PR-D est un proxy utilisant également le mécanisme de transport MPLS.

Lesdits proxys source PR-S et destination PR-D sont en outre connectés au réseau local VLAN.

Il est à noter que les dénominations « source » et « destination » font référence ici à des rôles respectivement joués par les proxys/hôtes dans le cadre de communications établies via la transmission de trames Ethernet, aussi bien au sein d'un réseau privé VPN auquel ils appartiennent ou bien à destination d'autres réseaux VPN IP/MPLS situés à l'extérieur du centre de données DC. Ces aspects sont explicités plus en détails ultérieurement lors de la description de différents procédés de communication selon l'invention.

Bien qu'il soit considéré dans le mode de réalisation de la figure 1 que le système informatique SI ne comporte que deux serveurs, dont un seul comportant un proxy/hôte source et un seul comportant un proxy/hôte destination), il importe de noter qu'il ne s'agit là que d'une variante d'implémentation de l'invention. Il n'en reste pas moins que qu'autres variantes d'implémentation sont envisageables, comme par exemple un seul serveur comportant un proxy/hôte source et une pluralité de serveurs comportant chacun un proxy/hôte destination, ou bien encore une pluralité de serveurs comportant chacun un proxy/hôte source et un seul serveur comportant un proxy/hôte destination, ou bien encore une pluralité de serveurs comportant chacun un proxy/hôte source et une pluralité de serveurs comportant chacun un proxy/hôte destination,

D'une manière générale, aucune limitation n'est attachée au nombre de serveurs comportant chacun un proxy/hôte source et au nombre de serveurs comportant chacun un proxy/hôte destination. Bien entendu, aucune limitation n'est non plus attachée au nombre d'hôtes pouvant être intégrés à un serveur. Par exemple, un serveur peut héberger plusieurs hôtes sources ou plusieurs hôtes destination, ou bien encore un hôte source et un hôte destination, ou bien encore un ou plusieurs hôtes sources et un ou plusieurs hôtes destination.

Enfin, aucune limitation n'est attachée au nombre de réseaux privés virtuels VPNs auxquels les proxys peuvent être raccordés. Par exemple, un serveur peut héberger plusieurs hôtes source pour lesquels un proxy devra mémoriser un identifiant différent pour leurs interfaces Ethernet virtuelles (il s'agit ici d'un identifiant dit « identifiant tunnel » comme cela est décrit plus en détails ultérieurement).

De manière conventionnelle, chaque hôte contenu dans un serveur est associé à une adresse matérielle MAC ainsi qu'à une adresse IP. La manière dont une adresse matérielle MAC peut être attribuée à un hôte est détaillée ultérieurement.

Chaque réseau virtuel privé est également associé à un identifiant permettant de le distinguer d'autres réseaux privés virtuels.

Pour la suite de la description, on adopte les notations selon lesquelles les adresses MAC des hôtes source CE-S et destination CE-D sont respectivement référencées CE-S MAC@ et CE-D MAC@. On considère également que l'hôte source CE-S (respectivement l'hôte destination CE-D) est associé à une adresse IP référencée CE-S NH@ (respectivement référencée CE-D NH@) et associée à ladite adresse matérielle CE-S MAC@ (respectivement associée à ladite adresse matérielle CE-D MAC@). Enfin, on considère aussi que les proxys source PR-S et destination PR-D sont rattachés à un même réseau privé virtuel de communication VPN donné, dont un identifiant est noté VPN-ID, de sorte à permettre aux hôtes source CE-S et destination CE-D de communiquer entre eux.

On note que la dénomination « adresse de saut » est également employée par la suite pour les adresses IP CE-S NH@ et CE-D NH@. Cette dénomination est utilisée pour signifier qu'il s'agit là d'une adresse à utiliser comme prochain saut (« Next Hop » en anglais) pour atteindre l'hôte auquel est associée une telle adresse IP.

Dans le présent mode de réalisation, et tel qu'illustré par la figure 1, le système informatique SI comporte également un réflecteur de routes RR connecté au réseau local VLAN. Conformément à l'invention, le réflecteur de routes RR est configuré pour réaliser des traitements permettant de mémoriser et d'annoncer des routes accessibles via lesdites adresses de saut CE-S NH@ et CE-D NH@, en mettant en œuvre un procédé de communication, dit « premier procédé », selon l'invention,

L'hôte source CE-S, quant à lui, est configuré pour réaliser des traitements permettant d'annoncer les routes accessibles via son adresse de saut CE-S NH@ de sorte à pouvoir établir une communication avec l'hôte destination CE-D, en mettant en œuvre un procédé de communication, dit « deuxième procédé », selon l'invention.

De manière similaire, l'hôte destination CE-D est configuré pour réaliser des traitements permettant d'annoncer les routes accessibles via son adresse de saut CE-D NH@ de sorte à pouvoir établir une communication avec l'hôte source CE-S, en mettant en œuvre un procédé de communication, dit « troisième procédé », selon l'invention.

La figure 2 représente schématiquement un exemple d'architecture matérielle du réflecteur de routes RR appartenant au système informatique SI de la figure 1, pour la mise en œuvre du premier procédé selon l'invention.

Tel qu'illustré par la figure 2, le réflecteur de routes RR dispose de l'architecture matérielle d'un ordinateur. Ainsi, le réflecteur de routes RR comporte, notamment, un processeur 1-RR, une mémoire vive 2-RR, une mémoire morte 3-RR et une mémoire non volatile 4-RR. Il comporte en outre un module de communication 5-RR.

La mémoire morte 3-RR du réflecteur de routes RR constitue un support d'enregistrement conforme à l'invention, lisible par le processeur 1-RR et sur lequel est enregistré un programme d'ordinateur PROG-RR conforme à l'invention, comportant des instructions pour l'exécution d'étapes du premier procédé. Le programme PROG-RR définit des modules fonctionnels (en l'espèce, il s'agit ici de modules logiciels) du réflecteur de routes RR, qui s'appuient ou commandent les éléments matériels 1-RR à 5-RR du proxy source PR-S cités précédemment, et qui comprennent notamment :
- un premier module de mémorisation MOD_MEM1-RR configuré pour mémoriser l'identifiant VPN-ID du réseau privé VPN en association avec l'adresse matérielle CE-S MAC@, CE-D MAC@ d'un hôte CE-S, CE-D,
- un premier module de réception MOD_RX1-RR configuré pour recevoir, en provenance d'un proxy PR-S, PR-D connecté à un hôte CE-S, CE-D, une notification comportant l'adresse de saut CE-S NH@, CE-D NH@ dudit hôte associée à l'adresse matérielle CE-S MAC@, CE-D MAC@ de celui-ci,
- un premier module de vérification MOD_VERIF1-RR configurer pour vérifier si une ou plusieurs autres adresses IP ont été mémorisées en association avec une ou plusieurs adresses matérielles d'hôtes (ladite ou lesdites adresses matérielles sont par exemples associées à d'autres éventuels hôtes qui peuvent être soit des hôtes source ou destination) par le réflecteur de routes RR avant la réception de ladite notification,
- un deuxième module de vérification MOD_VERIF2-RR configuré pour vérifier, si la vérification du premier module de vérification MOD_VERIF1-RR est positive, une correspondance entre l'adresse de saut reçue et ladite ou lesdites autres adresses IP,
- un deuxième module de mémorisation MOD_MEM2-RR configuré pour mémoriser, si la vérification du deuxième module de vérification MOD_VERIF2-RR est négative ou si aucune autre adresse IP n'a été mémorisée par le réflecteur de routes RR avant la réception de ladite notification, ladite adresse de saut reçue en association avec l'adresse matérielle de l'hôte,
- un deuxième module de réception MOD_RX2-RR configuré pour recevoir, en provenance d'un hôte CE-S, CE-D, un message d'annonce comportant les routes accessibles via l'adresse de saut CE-S NH@, CE-D NH@ associée audit hôte,
- un troisième module de mémorisation MOD_MEM3-RR configuré pour mémoriser les routes annoncées par un hôte CE-S, CE-D en association avec l'identifiant VPN-ID dudit réseau privé VPN, l'adresse matérielle CE-S MAC@, CE-D MAC@ de l'hôte et l'adresse de saut CE-S NH@, CE-D NH@ associée audit hôte,
- un module de transmission MOD_TX-RR configuré pour transmettre à l'hôte source CE-S un message d'annonce comportant les routes accessibles via l'adresse de saut CE-D NH@ de l'hôte destination CE-D.

Le module de communication 5-RR permet au réflecteur de routes RR de communiquer avec d'autres entités du système informatique SI, notamment les hôtes source CE-S et destination CE-D, les proxys source PR-S et destination PR-D, ainsi que le dispositif VNM. Il peut comprendre par exemple une carte réseau virtuelle ou tout autre moyen permettant de se connecter au réseau local VLAN. Ledit module de communication 5-RR intègre notamment lesdits premier et deuxième modules de réception MOD_RX1-RR, MOD_RX2-RR ainsi que le module de transmission MOD_TX-RR.

On note par ailleurs que les données mémorisées grâce aux différents modules de mémorisation MOD_MEM1-RR, MOD_MEM2-RR, MOD_MEM3-RR sont stockées, dans le présent mode de réalisation, dans la mémoire non volatile 4-RR équipant le réflecteur de routes RR,

La figure 3 représente schématiquement un exemple d'architecture matérielle de l'hôte source CE-S appartenant au système informatique SI de la figure 1, pour la mise en œuvre du deuxième procédé selon l'invention.

Tel qu'illustré par la figure 3, l'hôte source CE-S dispose de l'architecture matérielle d'un ordinateur. Ainsi, l'hôte source CE-S comporte, notamment, un processeur 1-S, une mémoire vive 2-S, une mémoire morte 3-S et une mémoire non volatile 4-S. Il comporte en outre un module de communication 5-S.

La mémoire morte 3-S de l'hôte source CE-S constitue un support d'enregistrement conforme à l'invention, lisible par le processeur 1-S et sur lequel est enregistré un programme d'ordinateur PROG-S conforme à l'invention, comportant des instructions pour l'exécution d'étapes du deuxième procédé. Le programme PROG-S définit des modules fonctionnels (en l'espèce, il s'agit ici de modules logiciels) de l'hôte source CE-S, qui s'appuient ou commandent les éléments matériels 1-S à 5-S de l'hôte source CE-S cités précédemment, et qui comprennent notamment :
- un premier module de transmission MOD_TX1-S configuré pour transmettre de manière gratuite au proxy source PR-S une notification comportant l'adresse matérielle CE-S MAC@ ainsi que l'adresse de saut CE-S NH@,
- un deuxième module de transmission MOD_TX2-S configuré pour transmettre au réflecteur de routes RR un message d'annonce comportant les routes accessibles via ladite adresse saut CE-S NH@,
- un module de réception MOD_RX-S configuré pour recevoir, en provenance du réflecteur de routes RR, un message d'annonce comportant les routes accessibles via l'adresse de saut CE-D NH@ de l'hôte destination CE-D.

Le module de communication 5-S permet à l'hôte source CE-S de communiquer avec d'autres entités du système informatique SI, notamment le proxy source PR-S, le dispositif VIM et le réflecteur de routes RR. Il peut comprendre par exemple une carte réseau virtuelle ou tout autre moyen permettant de se connecter au réseau local VLAN. Ledit module de communication 5-S intègre notamment lesdits premier et deuxième de transmission MOD_TX1-S, MOD_TX2-S, ainsi que le module de réception MOD_RX-S.

La figure 4 représente schématiquement un exemple d'architecture matérielle de l'hôte destination CE-D appartenant au système informatique SI de la figure 1, pour la mise en œuvre du troisième procédé selon l'invention.

Tel qu'illustré par la figure 4, l'hôte destination CE-D dispose de l'architecture matérielle d'un ordinateur. Ainsi, l'hôte destination CE-D comporte, notamment, un processeur 1-D, une mémoire vive 2-D, une mémoire morte 3-D et une mémoire non volatile 4-D. Il comporte en outre un module de communication 5-D,

La mémoire morte 3-D de l'hôte destination CE-D constitue un support d'enregistrement conforme à l'invention, lisible par le processeur 1-D et sur lequel est enregistré un programme d'ordinateur PROG-D conforme à l'invention, comportant des instructions pour l'exécution d'étapes du troisième procédé. Le programme PROG-D définit des modules fonctionnels (en l'espèce, il s'agit ici de modules logiciels) de l'hôte destination CE-D, qui s'appuient ou commandent les éléments matériels 1-D à 5-D de l'hôte destination CE-D cités précédemment, et qui comprennent notamment :
- un premier module de transmission MOD_TX1-D configuré pour transmettre de manière gratuite au proxy source PR-D une notification comportant l'adresse matérielle CE-D MAC@ ainsi que l'adresse de saut CE-D NH@,
- un deuxième module de transmission MOD_TX2-D configuré pour transmettre au réflecteur de routes RR un message d'annonce comportant les routes accessibles via ladite adresse saut CE-D NH@.

Le module de communication 5-D permet à l'hôte destination CE-D de communiquer avec d'autres entités du système informatique SI, notamment le proxy destination PR-D, le dispositif VIM et le réflecteur de routes RR. Il peut comprendre par exemple une carte réseau virtuelle ou tout autre moyen permettant de se connecter au réseau local VLAN. Ledit module de communication 5-D intègre notamment lesdits premier et deuxième de transmission MOD_TX1-D, MOD_TX2-D,

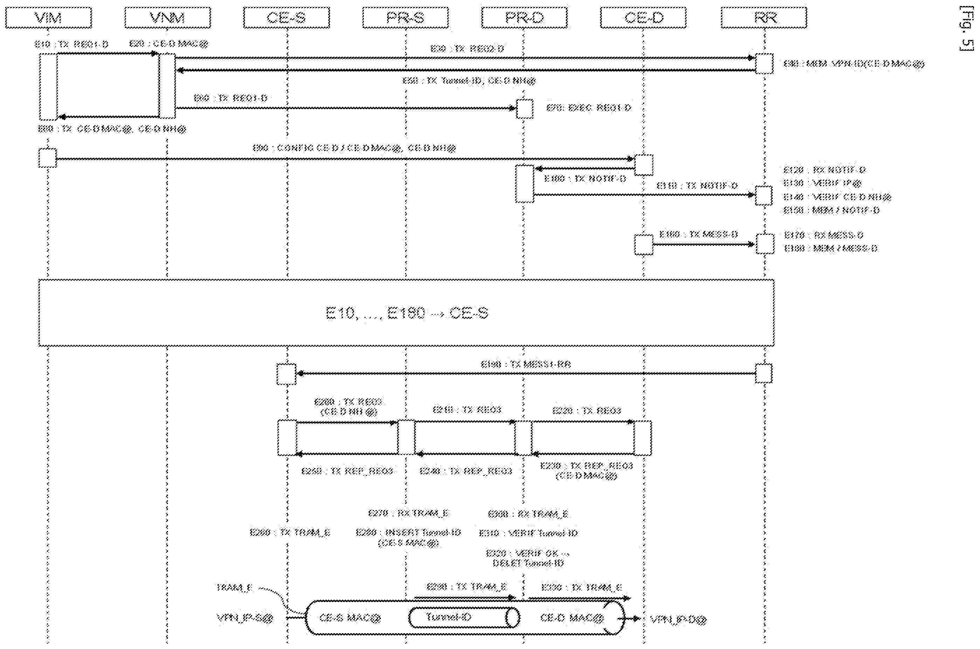

La figure 5 représente, sous forme d'ordinogramme, un mode particulier d'un procédé de communication, dit « procédé général », mis en œuvre par le système informatique SI. Ledit procédé général englobe lesdits premier, deuxième et troisième procédés selon l'invention respectivement mis en œuvre par le réflecteur de routes RR de la figure 2, l'hôte source CE-S de la figure 3 et l'hôte destination CE-D de la figure 4.

A cet effet, il convient de noter que les modules décrits ci-avant pour le réflecteur de routes RR, l'hôte source CE-S et l'hôte destination CE-D correspondent au principaux modules équipant ces entités pour la mise en œuvre desdits premier, deuxième et troisième procédés. Il n'en reste pas moins que chacune de ces entités peut encore être équipée d'autres modules non spécifiquement identifiés ci-après, comme cela apparaitra de manière évidente à l'homme de l'art.

Ledit procédé général comporte une pluralité d'étapes, dont en particulier un ensemble d'étapes exécuté pour chacun des hôtes des premier et deuxième serveurs SERV-1, SERV-2. Aussi, et dans un premier temps, on décrit ledit ensemble d'étapes pour l'hôte destination CE-D.

Tel qu'illustré par la figure 5, ledit procédé général comporte dans un premier temps une étape E10 d'émission d'une requête REQ1-D par le dispositif VIM. Ladite requête REQ1-D est établie de sorte à configurer, sur le réseau privé VPN et au niveau du proxy destination PR-D, une interface virtuelle pour l'hôte destination CE-D.

Sur réception de la requête REQ1-D, le dispositif VNM choisit une adresse matérielle MAC pour l'hôte destination CE-D au cours d'une étape E20 dudit procédé général. Dans le présent mode de mise en œuvre, ladite adresse matérielle MAC s'écrit CE-D MAC@, conformément aux notations introduites précédemment.

Une fois l'adresse CE-D MAC@ choisie, ledit procédé général comporte une étape E30 de transmission d'une requête REQ2-D, du dispositif VNM vers le réflecteur de routes RR. Ladite requête REQ2-D est une requête établie pour obtenir un identifiant, dit « identifiant tunnel », associé à l'identifiant VPN-ID du réseau privé VPN, l'objectif étant, comme cela est décrit ci-après, d'associer l'identifiant tunnel ainsi obtenu à l'adresse matérielle CE-D MAC@.

Sur réception de la requête REQ2-D, le réflecteur de routes RR mémorise l'identifiant VPN-ID du réseau privé VPN en association avec l'adresse matérielle CE-D MAC@ au cours d'une étape E40 du procédé général. Plus particulièrement, ladite étape E40 est mise en œuvre par le premier module de mémorisation MOD_MEM1-RR équipant le réflecteur de routes RR et fait partie intégrante, dans le présent mode de mise en œuvre, dudit premier procédé,

Puis, ledit réflecteur de routes RR transmet un identifiant tunnel noté, « Tunnel-ID » au dispositif VNM au cours d'une étape E50 du procédé général.

Ledit identifiant tunnel Tunnel-ID correspond, dans le présent mode de réalisation, à une étiquette MPLS et peut être déterminé de différentes manières. Par exemple, un tel identifiant tunnel Tunnel-ID peut avoir été préalablement configuré de manière manuelle au niveau du réflecteur de routes RR de sorte que ce dernier en a la connaissance. Selon un autre exemple, ledit identifiant tunnel Tunnel-ID peut être généré de manière aléatoire par le réflecteur de routes RR.

Dans le mode de mise en œuvre de la figure 5, la transmission de l'identifiant tunnel Tunnel-ID (étape 50) s'accompagne d'une transmission d'une adresse IP pour ledit hôte destination CE-D. Ladite adresse IP s'écrit CE-D NH@, conformément aux notations introduites précédemment, et correspond à une adresse de saut associée à l'hôte destination CE-D. L'adresse de saut CE-D NH@ ainsi transmise correspond à une adresse IP que le réflecteur de routes RR propose, de sa propre initiative, pour ledit hôte destination CE-D. Il convient toutefois de noter que le fait d'effectuer une telle proposition correspond à une mise en œuvre optionnelle du procédé général, visant à permettre d'éviter des collisions d'adresses. Rien n'exclut cependant d'envisager que le réflecteur de routes RR n'effectue pas une telle proposition d'adresse IP, et que ce soit le dispositif VNM qui s'en charge seul. D'ailleurs, rien n'exclut non plus d'envisager que le réflecteur de routes RR propose une adresse IP au dispositif VNM, mais que ce dernier n'en tienne pas compte et choisisse une adresse IP de sa propre initiative. En définitive, aucune limitation n'est attachée à la manière dont l'adresse de saut CE-D NH@ est attribuée à l'hôte destination CE-D pour le réseau privé VPN.

Il convient de noter que l'étape E40 de mémorisation est ici décrite comme étant déclenchée par la réception de la requête REQ2-D. Toutefois, rien n'exclut d'envisager que le réflecteur de routes RR mémorise l'identifiant VPN-ID du réseau privé VPN en association avec l'adresse matérielle CE-D MAC@ suite à la réception d'un message autre que ladite requête REQ2-D, comme par exemple un message d'information transmis par le dispositif VNM pour porter à la connaissance du réflecteur de routes RR les données destinées à être mémorisées.

En outre, rien n'exclut non plus d'envisager que le réflecteur de routes RR transmette au dispositif VNM l'identifiant tunnel Tunnel-ID de sa propre initiative, c'est-à-dire sans qu'une requête telle que ladite requête REQ2-D soit émise.

Pour traiter la requête REQ1-D, et une fois l'adresse CE-D MAC@ et l'identifiant tunnel Tunnel-ID en possession du dispositif VNM, ledit procédé général comporte une étape E60 de transmission de la requête REQ1-D, du dispositif VNM vers le proxy destination PR-D. On note que ladite requête REQ1-D comporte maintenant une demande d'association, au niveau du proxy destination PR-D, de l'adresse matérielle CE-D MAC@ avec l'identifiant tunnel Tunnel-ID lui-même déjà associé à l'identifiant VPN-ID.

Suite à la transmission de ladite requête REQ1-D au proxy destination PR-D, le procédé général comporte une étape E70 d'exécution de la requête REQ1-D par le proxy destination PR-D, de sorte qu'une interface virtuelle est configurée pour l'hôte destination CE-D au niveau du proxy destination PR-D.

Les adresses matérielle CE-D MAC@ et de saut CE-D NH@ sont en outre transmises du dispositif VNM vers le dispositif VIM. Cela fait l'objet d'une étape E80 du procédé général, comme l'illustre la figure 5. Dès lors, le dispositif VIM est en mesure de configurer l'hôte destination CE-D avec les adresses CE-D MAC@ et CE-D NH@ (i.e. d'attribuer à l'hôte destination CE-D les adresses CE-D MAC@ et CE-D NH@) que le dispositif VNM lui a communiquées, ce qui fait l'objet d'une étape E90 du procédé général.

Dans le mode de mise en œuvre de la figure 5, le procédé général comporte également une étape E100 de transmission gratuite, de l'hôte destination CE-D vers le proxy destination PR-D, d'une notification NOTIF-D comportant l'adresse matérielle CE-D MAC@ ainsi que l'adresse de saut CE-D NH@. Plus particulièrement, ladite étape E100 est mise en œuvre par le premier module de transmission MOD_TX1-D équipant l'hôte destination CE-D et fait partie intégrante du troisième procédé.

Il convient de noter que la transmission gratuite d'une notification comportant une adresse matérielle dépend de la version de l'adresse IP à laquelle elle correspond. Dans le cas d'adresse IPv4, l'hôte envoie un message ARP identique à celui prévu pour une réponse à une requête, mais sans avoir reçu de requête. De ce fait, il envoie ce message non pas à destination de l'adresse MAC d'un hôte ayant émis une requête, mais à destination de l'adresse MAC broadcast, de façon à ce que l'ensemble des hôtes sur le réseau local VLAN puisse la recevoir. Dans le cas d'adresse IPv6, l'hôte envoie un message ICMPv6 « UNA » (acronyme de l'expression anglaise « Unsolicited Neighbor Advertisement ») décrit dans le standard RFC 4861 de l'IETF, à destination de l'adresse IPv6 « ANMA » (acronyme de l'expression anglaise « All-Nodes Multicast Address ») qui lui permet d'être reconnue facilement par les routeurs pour que le message ne soit pas transmis comme un paquet IP en dehors du réseau local de commutation VLAN, ainsi qu'à destination d'une adresse MAC multicast associée, qui lui permet d'être transmis à l'ensemble des hôtes sur le réseau local de commutation VLAN.

Sur réception de la notification NOTIF-D, le proxy destination PR-D transmet ladite notification NOTIF-D au réflecteur de routes RR au cours d'une étape E110 du procédé général.

La notification NOTIF-D est alors reçue par le réflecteur de routes RR au cours d'une étape E120 du procédé général. Plus particulièrement, ladite étape E120 est mise en œuvre par le premier module de réception MOD_RX1-RR équipant le réflecteur de routes RR et fait partie intégrante, dans le présent mode de mise en œuvre, dudit premier procédé.

Sur réception de ladite notification NOTIF-D, le réflecteur de routes RR vérifie au cours d'une étape E130 du procédé général s'il a mémorisé, avant la réception de ladite notification NOTIF-ID, une ou plusieurs autres adresses IP en association avec une ou plusieurs adresses matérielles d'hôtes. Plus particulièrement, ladite étape E130 est mise en œuvre par le premier module de vérification MOD_VERIF1-RR équipant le réflecteur de routes RR et fait partie intégrante, dans le présent mode de mise en œuvre, dudit premier procédé.

Dès lors, dans le cas où le réflecteur de routes RR avait effectivement stocké en mémoire une ou plusieurs autres adresse IP pour un ou plusieurs hôtes avant la réception de la notification NOTIF-D, le réflecteur de routes RR effectue, au cours d'une étape E140 du procédé général, une vérification de correspondance entre l'adresse de saut CE-D NH@ et ladite ou lesdites autres adresses IP déjà mémorisées. Plus particulièrement, ladite étape E140 est mise en œuvre par le deuxième module de vérification MOD_VERIF2-RR équipant le réflecteur de routes RR et fait partie intégrante, dans le présent mode de mise en œuvre, dudit premier procédé.

Si la vérification de correspondance faisant l'objet de l'étape E140 est négative, le réflecteur de routes RR mémorise, au cours d'une étape E150 du procédé général, ladite adresse de saut CE-D NH@ en association avec l'adresse matérielle CE-D MAC@ de l'hôte destination CE-D. Plus particulièrement, ladite étape E150 est mise en œuvre par le deuxième module de mémorisation MOD_MEM2-RR équipant le réflecteur de routes RR et fait partie intégrante, dans le présent mode de mise en œuvre, dudit premier procédé.

Il convient de noter que ladite étape E150 est également mise en œuvre dans le cas où aucune autre adresse IP n'a été mémorisée en association avec l'adresse matérielle CE-D MAC@ dudit hôte destination CE-D par le réflecteur de routes RR avant la réception de ladite notification NOTIF-D. Dit autrement, si la vérification faisant l'objet de l'étape E130 renvoie un résultat négatif, l'étape E150 est directement mise en œuvre (i.e. aucune étape E140 n'est mise en œuvre).

Dans le mode de mise en œuvre de la figure 5, le procédé général comporte également une étape E160 de transmission, de l'hôte destination CE-D vers le réflecteur de routes RR, d'un message d'annonce MESS-D comportant les routes accessibles via ladite adresse saut CE-D NH@. Plus particulièrement, ladite étape E160 est mise en œuvre par le deuxième module de transmission MOD_TX2-D équipant l'hôte destination CE-D et fait partie intégrante, dans le présent mode de mise en œuvre, dudit troisième procédé.

Le message d'annonce MESS-D est alors reçu par le réflecteur de routes RR en provenance de l'hôte destination CE-D au cours d'une étape E170 du procédé général. Plus particulièrement, ladite étape E170 est mise en œuvre par le deuxième module de réception MOD_RX2-RR équipant le réflecteur de routes RR et fait partie intégrante, dans le présent mode de mise en œuvre, dudit premier procédé.

Sur réception dudit message d'annonce MESS-D, le réflecteur de route RR mémorise, au cours d'une étape E180 du procédé général, les routes ainsi annoncées (i.e. les routes contenues dans le message d'annonce MESS-D) en association avec l'identifiant VPN-ID dudit réseau privé VPN, l'adresse matérielle CE-D MAC@ de l'hôte destination CE-D et ladite adresse de saut CE-D NH@. Plus particulièrement, ladite étape E180 est mise en œuvre par le troisième module de mémorisation MOD_MEM3-RR équipant le réflecteur de routes RR et fait partie intégrante, dans le présent mode de mise en œuvre, dudit premier procédé.

Les étapes E10 à E180 forment les étapes de l'ensemble d'étapes mentionné auparavant. En outre, et comme cela a également été mentionné auparavant, ledit ensemble d'étapes E10 à E180 est exécuté pour chacun des hôtes des serveurs SERV-1, SERV-2, donc en particulier également pour l'hôte source CE-S. Par souci de simplification de la description, lesdites étapes E10 à E180 ne sont pas à nouveau décrites ici en détails pour le cas de l'hôte source CE-S. On précise, à tout le moins, et tel que cela est représenté sur la figure 5, que les signes de référence REQ1-D, REQ2-D, NOTIF-D, MESS-D sont respectivement renommés REQ1-S, REQ2-S, NOTIF-S, MESS-S pour cette itération de l'ensemble d'étapes E10 à E180.

On comprend en outre que lorsque les étapes E10 à E180 sont itérées pour l'hôte source CE-S, les étapes E100 et E160 font partie intégrante du deuxième procédé mis en œuvre par ledit hôte source CE-S.

Par ailleurs, il est à noter que l'identifiant tunnel Tunnel-ID transmis par le réflecteur de route RR au dispositif VNM (étape E50) lorsque l'ensemble d'étapes E10 à E180 est exécuté pour l'hôte destination CE-D est identique à celui transmis au dispositif VNM lorsque l'ensemble d'étapes E10 à E180 est exécuté pour l'hôte source CE-S. Cela est dû au fait que lesdits premier et deuxième serveurs SERV-1, SERV-2 sont rattachés au même réseau privé VPN. En définitive, les interfaces virtuelles associées aux hôtes destination CE-D et source CE-S au niveau des proxy destination PR-D et source PR-D sont configurées avec le même identifiant tunnel Tunnel-ID,

Il importe de noter que l'ensemble d'étapes E10 à E180 a été exécuté, dans le présent mode de mise en œuvre, pour l'hôte destination CE-D dans un premier temps, puis ensuite pour l'hôte source CE-S. Il ne s'agit toutefois là que d'un choix d'implémentation purement arbitraire, et l'ordre évoqué peut bien entendu être inversé.

La mise en œuvre du procédé général ne s'arrête pas à l'étape E180. Ainsi, et tel qu'illustré par la figure 5, le procédé général comporte également une étape E190 de transmission, du réflecteur de routes RR à l'hôte source CE-S, d'un message d'annonce MESS1-RR comportant les routes accessibles via l'adresse de saut CE-D NH@ de l'hôte destination CE-D. Plus particulièrement, ladite étape E190 est mise en œuvre par le module de transmission MOD_TX-RR équipant le réflecteur de routes RR et fait partie intégrante, dans le présent mode de mise en œuvre, dudit premier procédé.

Une fois ledit message d'annonce MESS1-RR reçu par l'hôte source CE-S, le procédé général comporte des étapes optionnelles permettant la mise en œuvre effective d'une communication entre les hôtes source CE-S et destination CE-D. Plus particulièrement, ledit procédé général comporte une étape E200 de transmission, de l'hôte source CE-S au proxy source PR-S, d'une requête REQ3, Ladite requête REQ3 est une requête de résolution d'adresse pour l'adresse de saut CE-D NH@.

On note que l'émission de la requête s'effectue conformément à un protocole de résolution d'adresses « ARP » (acronyme de l'expression anglaise « Address Resolution Protocol ») dans le cas d'adresses IPv4, ou bien conformément à un protocole de résolution d'adresses « ICMPv6 » (acronyme de l'expression anglaise « Internet Control Message Protocol version 6) dans le cas d'adresses IPv6, tous deux connus de l'homme de l'art comme protocoles de résolution d'adresses matérielles utilisables au sein d'un réseau local virtuel de commutation VLAN.

Aussi, sur réception de la requête REQ3, le proxy source PR-S transmet ladite requête REQ3 au proxy destination PR-D au cours d'une étape E210 du procédé général.

Sur réception de la requête REQ3, le proxy destination PR-D transmet ladite requête REQ3 à l'hôte destination CE-D au cours d'une étape E220 du procédé général.

Sur réception de la requête REQ3, l'hôte destination CE-D répond à ladite requête REQ3 en transmettant, au cours d'une étape E230 du procédé général, une réponse REP_REQ3 au proxy destination PR-D, ladite réponse comportant l'adresse matérielle CE-D MAC@.

Sur réception de ladite réponse REP_REQ3, le proxy destination PR-D transmet ladite réponse REP_REO3 au proxy source PR-S au cours d'une étape E240 du procédé général.

Sur réception de ladite réponse REP_REQ3, le proxy source PR-S transmet ladite réponse REP_REQ3 à l'hôte source CE-S au cours d'une étape E250 du procédé général.

Il est à noter que le procédé général est ici décrit dans un mode de mise en œuvre pour lequel le système informatique SI ne comporte qu'un seul proxy destination (en l'espèce, il s'agit du proxy destination PR-D des figures 1 et 4). On peut néanmoins remarquer que si ledit système informatique SI comporte une pluralité de proxy destination, la requête REQ3 émise par l'hôte source CE-S (étape E200) et reçue par le proxy source PR-S est transmise par ce dernier à l'ensemble desdits proxy destination. Bien entendu, dans la mesure où cette requête REQ3 concerne une résolution d'adresse pour l'adresse IP CE-D NH@, seul l'hôte destination CE-D y répond.

Par ailleurs, dans le mode de mise en œuvre de la figure 5, le procédé général comporte également une étape E260 d'émission, par l'hôte source CE-S et à destination de l'hôte destination CE-D, d'un paquet IP au sein d'une trame Ethernet TRAM_E. Ainsi, ladite trame Ethernet TRAM_E encapsule ledit paquet IP émis par l'hôte source CE-S, et comporte ici les adresses matérielles CE-S MAC@ et CE-D MAC@ qui forment donc respectivement des adresses de source et de destination de la trame TRAM_E.

L'adresse IP source attachée à ce paquet IP est notée VPN_IP-S@ dans la figure 5.

Le procédé général comporte alors une étape E270 de réception, en provenance de l'hôte source CE-S, de la trame TRAM_E par le proxy source PR-S.

Sur réception de la trame TRAM_E, le proxy source PR-S insère dans ladite trame TRAM_E, et au cours d'une étape E280 du procédé général, l'identifiant tunnel Tunnel-ID entre les adresses matérielles CE-S MAC@, CE-D MAC@ et le paquet IP,

L'insertion de l'identifiant Tunnel-ID dans la trame TRAM_E est symbolisé dans la figure 5 par le fait que ledit identifiant Tunnel-ID définit un tunnel MPLS placé à l'intérieur de la trame TRAM_E. Le proxy source PR-S forme ainsi un point de terminaison dudit tunnel MPLS, ce qui est aussi le cas du proxy destination PR-D comme cela est décrit ci-après.

Il est à noter que si le paquet IP encapsulé dans la trame TRAME est conforme à un paquet IPv6, il peut être vérifié, avant d'insérer l'identifiant tunnel Tunnel-ID et suivant un exemple particulier de mise en œuvre, que ledit paquet IP ne comporte pas de message (requête ou réponse) de résolution d'adresse ICMPv6.

Le choix consistant à effectuer une telle vérification ne constitue toutefois qu'une variante d'implémentation de l'étape E150, et il est bien entendu possible d'envisager encore d'autres variantes.

En effet, contrairement aux paquets IP, qui ont vocation à être transférés par un routeur d'un VLAN vers un autre VLAN, les messages de résolution d'adresse matérielle ne peuvent être échangés qu'à l'intérieur d'un réseau local de commutation VLAN. Aussi, pour des adresses IP de prochain saut de type IPv4 (version 4 du protocole IP), les messages du protocole ARP sont encapsulés directement sur Ethernet et ne peuvent donc pas sortir d'un VLAN. Par contre, pour les adresses IP de prochain saut de type IPv6 (version 6 du protocole IP), les messages du protocole ICMPv6 sont encapsulé en IP sur Ethernet et utilisent des adresses IPv6 spécifiques, comme les « LLA » (acronyme de l'expression anglaise « Link-Local Address ») ou les SNMA (acronyme de l'expression anglaise « Solicited-Node Multicast Address ») dont le format défini dans le standard RFC 4861 de l'IETF leur permet d'être reconnues facilement par les routeurs pour éviter de les traiter comme des paquets IP. EN outre, les paquets IP de type IPv6 utilisent des adresses IPv6 différentes, appelées GUA (acronyme de l'expression anglaise « Global Unicast Address ») dont le format standard, différent des adresses LLA ou SNMA, leur permet d'être reconnues facilement par les routeurs pour autoriser leur transfert vers d'autres VLAN que celui sur lequel ils ont été reçus.

En d'autres termes, il est possible, suivant un autre exemple de mise en œuvre et sur la base des considérations susmentionnées, de déterminer si un paquet IPv6 comporte ou non un message de résolution d'adresse en effectuant cette fois-ci une vérification portant sur l'adresse destination utilisée (LLA et SNMA, ou bien GUA),

A titre illustratif, un exemple de vérification basé sur le type d'adresses destination peut consister à vérifier :
- si l'adresse est de type LLA ou SNMA, auquel cas il s'agit d'un message de résolution d'adresse, et il convient de ne pas insérer d'identifiant tunnel ; ou
- si l'adresse est de type GUA, auquel cas il s'agit d'un paquet IP, et il convient d'insérer un identifiant tunnel.

Un autre exemple de vérification basé sur le numéro de protocole contenu dans l'en-tête IP peut consister à vérifier :
- si le numéro de protocole est le numéro standard attribué au protocole ICMPv6, auquel cas il s'agit d'un message de résolution d'adresse, et il convient de ne pas insérer d'identifiant tunnel ; ou
- si le numéro de protocole n'est pas le numéro standard attribué, au protocole ICMPv6, auquel cas il s'agit d'un paquet IP, et il convient d'insérer un identifiant tunnel.

Une fois l'identifiant Tunnel-ID ainsi inséré, la trame TRAM_E est transmise par le proxy source PR-S au proxy destination PR-D. Cela fait l'objet d'une étape E290 du procédé général, comme l'illustre la figure 5.

Le procédé général comporte alors une étape E300 de réception, en provenance du proxy source PR-S, de la trame TRAM_E par le proxy destination PR-D.

Sur réception de ladite trame TRAM_E, le proxy destination PR-D vérifie, au cours d'une étape E310 du procédé général, si l'identifiant Tunnel-ID, inséré entre lesdites adresses matérielles CE-S MAC@, CE-D MAC@ et le paquet IP, correspond à un identifiant, dit « deuxième identifiant », contenu dans une table de données stockée par ledit proxy destination PR-D et mettant en correspondance l'adresse matérielle CE-D MAC@ de l'hôte destination CE-D avec ledit deuxième identifiant.

Finalement, si la vérification de correspondance entre l'identifiant tunnel Tuririel-ID et ledit deuxième identifiant est positive, le proxy destination PR-D retire l'identifiant Tunnel-ID de la trame TRAM_E au cours d'une étape E320.

En outre, suite au retrait de l'identifiant Tunnel-ID, le proxy destination PR-D transmet la trame TRAM_E à l'hôte destination CE-D au cours d'une étape E330.

L'adresse IP destination attachée à ce paquet IP est notée VPN_IP-D@ dans la figure 5.

Le procédé général, et donc en particulier les premier, deuxième et troisième procédés, ont été décrits jusqu'à présent en considérant que le système informatique SI comporte lesdits premier et deuxième serveurs SERV-1, SERV-2. Cela étant, rien n'exclut non plus d'envisager que le système informatique SI comporte uniquement un seul serveur comprenant un proxy et un hôte, ces derniers pouvant dès lors porter la dénomination « source » ou bien « destination » selon que ledit hôte est destiné à être à l'origine ou bien destinataire d'une communication. Dès lors, dans cette configuration, ledit ensemble d'étapes E10 à E180 est exécuté une unique fois, à savoir donc pour l'hôte considéré dans ledit unique serveur. On note également qu'il n'y a pas lieu d'envisager l'étape E190 tant qu'aucun autre hôte n'est considéré dans le système informatique SI.

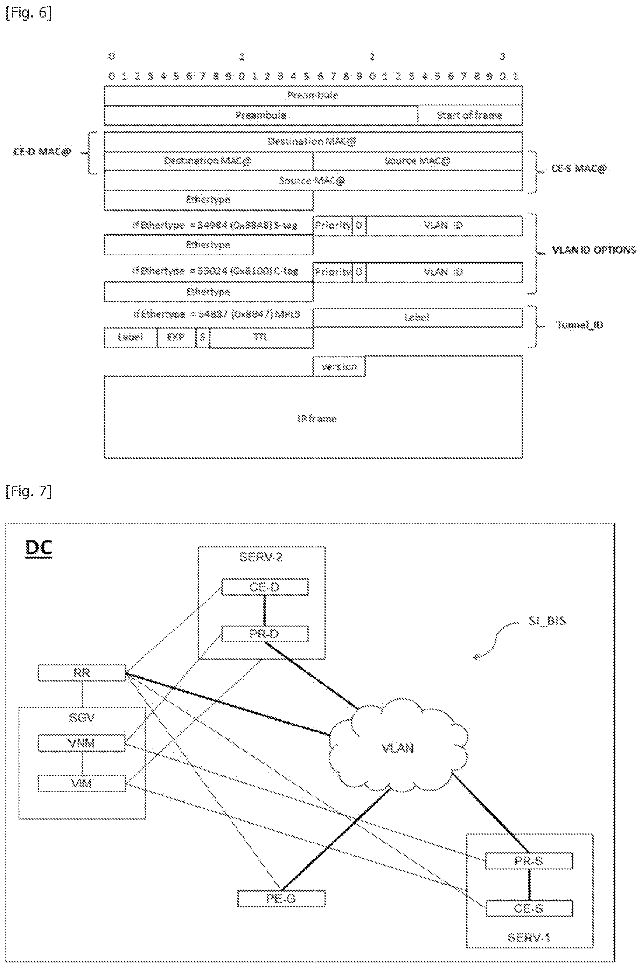

La figure 6 représente schématiquement la trame Ethernet TRAM_E après que le proxy source PR-S y ait introduit l'identifiant tunnel Tunnel-ID lors de la mise en œuvre du procédé de la figure 5.

Comme cela peut être constaté sur cette figure 6, ledit identifiant Tunnel-ID est placé entre les adresses matérielles CE-S MAC@, CE-D MAC@ et le paquet IP (contenu ici dans une trame IP référencée au moyen de l'expression anglaise « IP frame »).

On note que la trame Ethernet TRAM_E peut comporter en option un ou plusieurs identifiants de VLAN S-VLAN ou C-VLAN connus de l'homme de l'art, pouvant l'un ou l'autre servir d'identifiant aux commutateurs Ethernet auxquels sont raccordés les serveurs informatiques SERV-1 et SERV-2, pour reconnaître, parmi d'autres, les trames à commuter au sein du réseau local virtuel de commutation VLAN auquel sont raccordés les proxys PR-S et PR-D.

La suite de la description concerne désormais une variante de réalisation du système informatique SI ainsi que des procédés mis en œuvre par les entités appartenant à cette variante de réalisation et permettant d'établir des communications depuis le réseau privé VPN (respectivement vers le réseau privé VPN) d'un hôte vers un autre réseau VPN IP/MPLS situé à l'extérieur du centre de données DC (respectivement depuis un autre réseau VPN IP/MPLS situé à l'extérieur du centre de données DC).

La figure 7 représente schématiquement, dans son environnement, un autre mode particulier de réalisation d'un système informatique SI_BIS selon l'invention.

Le système informatique SI_BIS de la figure 7 diffère du système informatique de la figure 1 en ce qu'il comporte en sus une passerelle réseau PE-G connectée au réseau local VLAN. Une telle passerelle PE-G est, de manière connue en soi, positionnée en périphérie du réseau local VLAN implémenté dans le centre de données DC par le système informatique SI_BIS. Il est à noter que la passerelle PE-G est également associée à une adresse matérielle PE-G MAC@.

Le système informatique SI_BIS est configuré pour mettre en œuvre des modes de mise en œuvre du procédé général qui diffèrent de celui décrit ci-avant en référence à la figure 5.

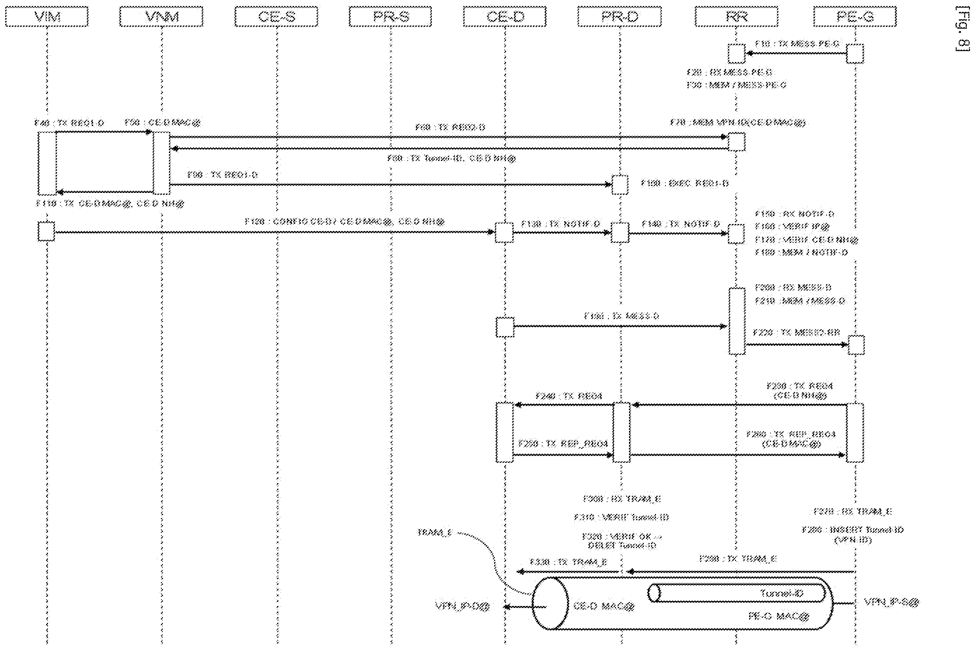

La figure 8 représente, sous forme d'ordinogramme, un mode particulier, dit « mode de communication rentrant », du procédé général mis en œuvre par le système informatique SI_BIS de la figure 7. Ledit mode de communication rentrant permet d'établir une communication depuis un réseau extérieur au centre de données DC vers l'hôte destination CE-D.

Tel qu'illustré par la figure 8, ledit procédé général comporte dans un premier temps une étape F10 de transmission, de la passerelle PE-G au réflecteur de routes RR, d'un message d'annonce MESS-PE-G comportant l'identifiant tunnel Tunnel-ID ainsi que les routes accessibles, au moyen dudit identifiant tunnel Tunnel-ID et dans le réseau privé VPN identifié par l'identifiant VPN-ID, via une adresse IP PE-G NH@ de ladite passerelle PE-G.

Ledit message d'annonce MESS-PE-G est reçu par le réflecteur de routes RR au cours d'une étape F20 du procédé général. Plus particulièrement, ladite étape F20 est mise en œuvre par un module de réception équipant le réflecteur de routes RR et dédié à cet effet.

Le réflecteur de routes RR mémorise alors, au cours d'une étape F30 du procédé général, les routes ainsi annoncées en association avec l'identifiant VPN-ID, ledit identifiant tunnel Tunnel-ID et l'adresse PE-G NH@ de la passerelle PE-G. Plus particulièrement, ladite étape F30 est mise en œuvre par un module de mémorisation équipant le réflecteur de routes RR et dédié à cet effet.

Dans ledit mode de communication rentrant, le procédé général comporte également des étapes F40 à F210 qui sont respectivement identiques aux étapes E10 à E180 décrites ci-avant pour l'hôte destination CE-D en référence à la figure 5.

Puis, dans ledit mode de communication rentrant, le procédé général comporte également une étape F220 de transmission, du réflecteur de routes RR à la passerelle PE-G, d'un message d'annonce MESS2-RR comportant les routes accessibles, au moyen dudit identifiant tunnel Tunnel-ID et dans le réseau privé VPN identifié par ledit identifiant VPN-ID, via l'adresse de saut CE-D NH@. Plus particulièrement, ladite étape F220 est mise en œuvre par un module de transmission équipant le réflecteur de routes RR et dédié à cet effet,

On note donc que le message MESS2-RR diffère du message MESS-PE-G en ce que le message MESS-PE-G annonce au réflecteur de routes RR les routes accessibles via la passerelle PE-G (via PE-G NH@), là où MESS2-RR annonce à la passerelle PE-G les routes accessibles via l'hôte destination CE-D (via CE-D NH@).

Ledit procédé général comporte également une étape F230 de transmission, de la passerelle PE-G au proxy destination PR-D, d'une requête REQ4. Ladite requête REQ4 est une requête de résolution d'adresse pour l'adresse de saut CE-D NH@.

Sur réception de la requête REQ4, le proxy destination PR-D transmet ladite requête REQ4 à l'hôte destination CE-D au cours d'une étape F240 du procédé général.

Sur réception de la requête REQ4, l'hôte destination CE-D répond à ladite requête REQ4 en transmettant, au cours d'une étape F250 du procédé général, une réponse REP_REQ4 au proxy destination PR-D, ladite réponse comportant l'adresse matérielle CE-D MAC@.

Sur réception de ladite réponse REP_REQ4, le proxy destination PR-D transmet ladite réponse REP_REQ4 à la passerelle PE-G au cours d'une étape F260 du procédé général.

Par ailleurs, dans le mode de communication rentrant de la figure 8, le procédé général comporte également une étape F270 de réception, par la passerelle PE-G et depuis un réseau externe au centre de données, d'un paquet IP destiné à l'hôte destination CE-D.

L'adresse IP source attachée à ce paquet IP est à nouveau notée VPN_IP-S@ dans la figure 8.

Sur réception du paquet IP, la passerelle PE-G insère ledit paquet IP, au cours d'une étape F280 du procédé général, dans une trame TRAM_E comportant les adresses matérielles PE-G MAC@ et CE-D MAC@ ainsi que l'identifiant tunnel Tunnel-ID entre les adresses matérielles PE-G MAC@, CE-D MAC@ et le paquet IP.

Une fois le paquet IP et l'identifiant Tunnel-ID ainsi insérés, la trame TRAM_E est transmise par la passerelle PE-G au proxy destination PR-D. Cela fait l'objet d'une étape F290 du procédé général selon ledit mode de communication rentrant, comme l'illustre la figure 8.

Le procédé général comporte alors une étape F300 de réception, en provenance de la passerelle PE-G, de la trame TRAM_E par le proxy destination PR-D.

Sur réception de ladite trame TRAM_E, le proxy destination PR-D vérifie, au cours d'une étape F310, si l'identifiant Tunnel-ID, inséré entre lesdites adresses matérielles PE-G MAC@, CE-D MAC@ et le paquet IP, correspond à l'identifiant tunnel dont il a connaissance en correspondance avec l'adresse matérielle CE-D MAC@ de l'hôte destination CE-D,

Finalement, si la vérification de correspondance est positive, le proxy destination PR-D retire l'identifiant Tunnel-ID de la trame TRAM_E au cours d'une étape F320.

En outre, suite au retrait de l'identifiant Tunnel-ID, le proxy destination PR-D transmet la trame TRAM_E à l'hôte destination CE-D au cours d'une étape F330.

L'adresse IP destination attachée à ce paquet IP est à nouveau notée VPN_IP-D@ dans la figure 8.

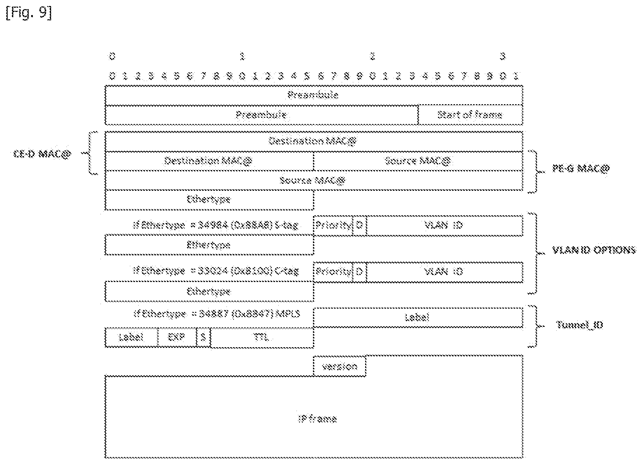

La figure 9 représente schématiquement la trame Ethernet TRAM_E après que la passerelle PE-G y ait introduit l'identifiant tunnel Tunnel-ID lors de la mise en œuvre du procédé de la figure 8.

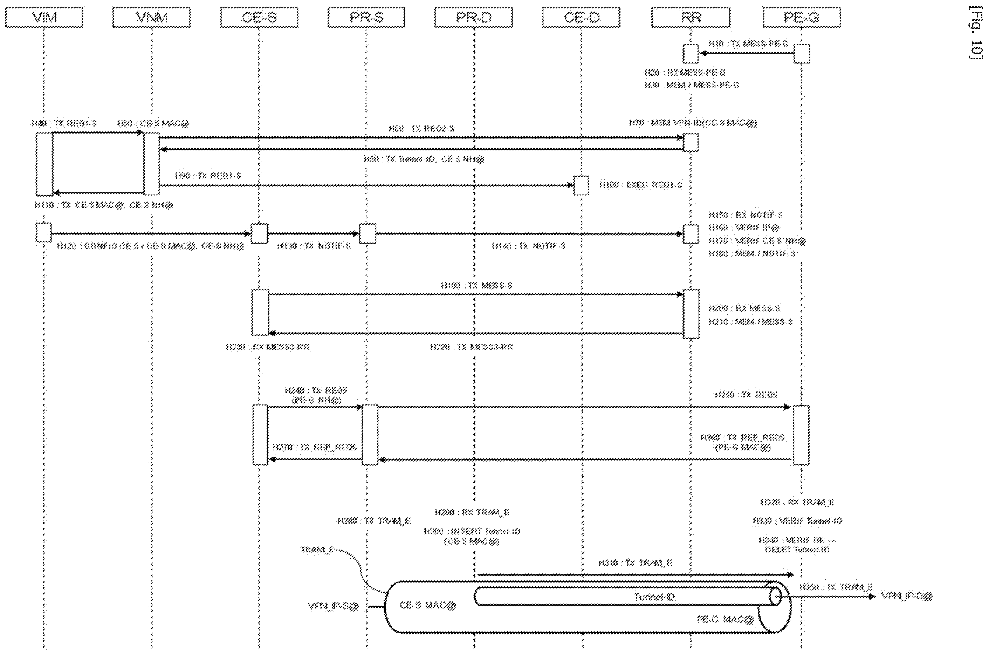

La figure_10 représente, sous forme d'ordinogramme, un mode particulier, dit « mode de communication sortant », du procédé général mis en œuvre par le système informatique SI_BIS de la figure 7. Ledit mode de communication sortant permet d'établir une communication depuis l'hôte source CE-S vers un réseau extérieur au centre de données DC.

Tel qu'illustré par la figure 10, ledit procédé général comporte dans un premier temps des étapes H10 à H30 qui sont respectivement identiques aux étapes F10 à F30 décrites ci-avant en référence à la figure 8.

Dans ledit mode de communication sortant, le procédé général comporte également des étapes H40 à H210 qui sont respectivement identiques aux étapes E10 à E180 décrites ci-avant pour l'hôte destination CE-S en référence à la figure 5.

Puis, dans ledit mode de communication sortant, le procédé général comporte également une étape H220 de transmission, du réflecteur de routes RR à l'hôte source CE-S, d'un message d'annonce MESS3-RR comportant les routes accessibles, dans le réseau privé VPN, via l'adresse IP PE-G NH@ de ladite passerelle PE-G. Plus particulièrement, ladite étape H220 est mise en œuvre par un module de transmission équipant le réflecteur de routes RR et dédié à cet effet.

On note que la différence entre les messages MESS-PE-G et MESS3-RR réside dans le fait que les routes accessibles via la passerelle PE-G (via PE-G NH@) sont d'une part annoncées au réflecteur de routes RR (via le message MESS-PE-G) par la passerelle PE-G, puis d'autre part annoncées à l'hôte source CE-S (via le message MESS3-RR) par le réflecteur de routes RR.

Ledit message d'annonce MESS3-RR est reçu par l'hôte source CE-S au cours d'une étape H230 du procédé général selon ledit mode de communication sortant. Plus particulièrement, ladite étape H230 est mise en œuvre par un module de réception équipant l'hôte source CE-S et dédié à cet effet.

Ledit procédé général comporte également une étape_H240 de transmission, de l'hôte source CE-S au proxy source PR-S, d'une requête REQ5. Ladite requête REQ5 est une requête de résolution d'adresse pour l'adresse IP PE-G NH@ de la passerelle PE-G.

Sur réception de la requête REQ5, le proxy source PR-S transmet ladite requête REQ5 à la passerelle PE-G au cours d'une étape H250 du procédé général.

Sur réception de la requête REQ5, la passerelle PE-G répond à ladite requête REQ5 en transmettant, au cours d'une étape H260 du procédé général, une réponse REP_REQ5 au proxy source PR-S, ladite réponse comportant l'adresse matérielle PE-G MAC@.

Sur réception de ladite réponse REP_REQ5, le proxy source PR-S transmet ladite réponse REP_REQ5 à l'hôte source CE-S au cours d'une étape H270 du procédé général.

Par ailleurs, dans le mode de communication sortant de la figure 10, le procédé général comporte également une étape_H280 de transmission, par l'hâte source CE-S et à la passerelle PE-G, d'une trame Ethernet TRAM_E encapsulant un paquet IP. Ladite trame Ethernet TRAM_E comporte ici les adresses matérielles CE-S MAC@ et PE-G MAC@.

L'adresse IP source attachée à ce paquet IP est à nouveau notée VPN_IP-S@ dans la figure 10.

Le procédé général comporte alors une étape H290 de réception, en provenance de l'hôte source CE-S, de la trame TRAM_E par le proxy source PR-S.

Sur réception de la trame TRAM_E, le proxy source PR-S insère dans ladite trame TRAM_E, et au cours d'une étape H300 du procédé général, l'identifiant tunnel Tuririel-ID entre les adresses matérielles CE-D MAC@, PE-G MAC@ et le paquet IP.

Une fois l'identifiant Tunnel-ID ainsi inséré, la trame TRAM_E est transmise par le proxy source PR-S à la passerelle PE-G. Cela fait l'objet d'une étape H310 du procédé général selon ledit mode de communication sortant, comme l'illustre la figure 10.

Le procédé général comporte alors une étape H320 de réception, en provenance du proxy source PR-S, de la trame TRAM_E par la passerelle PE-G.

Sur réception de ladite trame TRAM_E, la passerelle PE-G vérifie, au cours d'une étape H330, si l'identifiant Tunnel-ID, inséré entre lesdites adresses matérielles CE-S MAC@, PE-G MAC@ et le paquet IP, correspond à l'identifiant tunnel dont elle a connaissance (i.e. l'identifiant tunnel communiqué au réflecteur de routes au cours de l'étape H10) en correspondance avec l'identifiant VPN-ID du réseau privé VPN.

Finalement, si la vérification de correspondance est positive, la passerelle PE-G récupère le paquet IP de la trame TRAM_E au cours d'une étape H340.

En outre, suite à la récupération du paquet IP, la passerelle PE-G propage le paquet IP à l'extérieur du réseau local VLAN vers un hôte distant approprié dans le réseau privé VPN au cours d'une étape H350.

L'adresse IP destination attachée à ce paquet IP est à nouveau notée VPN_IP-D@ dans la figure 10.

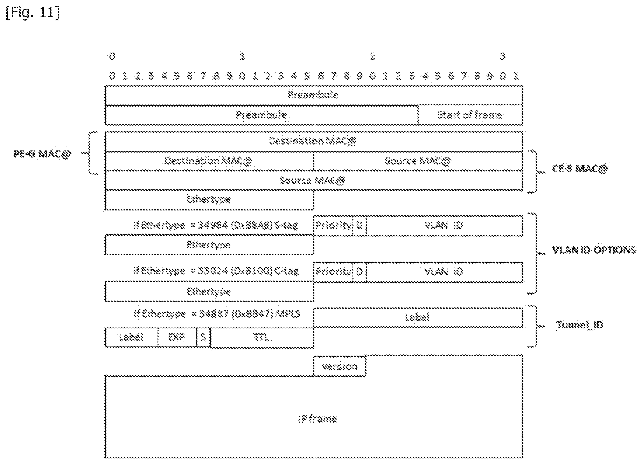

La figure 11 représente schématiquement la trame Ethernet TRAM_E après que le proxy source PR-S y ait introduit l'identifiant tunnel Tunnel-ID lors de la mise en œuvre du procédé de la figure 10.

## Revendications

1. Procédé de communication mis en œuvre par un réflecteur de routes (RR) appartenant à un système informatique (SI) implémentant un réseau local virtuel de commutation (VLAN) auquel est connecté ledit réflecteur de routes, ledit système informatique comportant en outre au moins un serveur (SERV-1, SERV-2) dans lequel sont connectés un proxy virtuel de commutation multiprotocole avec étiquette (PR-S, PR-D) et un hôte (CE-S, CE-D), ledit proxy virtuel étant connecté au réseau local ainsi que rattaché à un réseau privé virtuel de communication, ledit procédé comportant, pour chaque hôte d'un serveur, un ensemble d'étapes de :
- mémorisation (E40, F70, H70) d'un identifiant (VPN-ID) dudit réseau privé en association avec une adresse matérielle (CE-S MAC@, CE-D MAC@) de l'hôte,
- réception (E120, F150, H150), en provenance du proxy connecté audit hôte, d'une notification (NOTIF-D) comportant une adresse IP de l'hôte, dite « adresse de saut » (CE-S NH@, CE-D NH@), associée à ladite adresse matérielle,
- si, avant la réception de ladite notification, une ou plusieurs autres adresses IP ont été mémorisées (E130, F160, H160) en association avec une ou plusieurs adresses matérielles d'hôtes par le réflecteur de routes, vérification (E140, F170, H170) d'une correspondance entre ladite adresse de saut et ladite ou lesdites autres adresses IP,
- si la vérification de correspondance est négative ou si aucune autre adresse IP n'a été mémorisée par le réflecteur de routes avant la réception de ladite notification, mémorisation (E150, F180) de ladite adresse de saut en association avec l'adresse matérielle de l'hôte,
- réception (E170, F200, H200), en provenance de l'hôte, d'un message d'annonce (MESS-D) comportant les routes accessibles via ladite adresse de saut,
- mémorisation (E180, F210, H210) desdites routes annoncées en association avec l'identifiant dudit réseau privé, l'adresse matérielle de l'hôte et ladite adresse de saut.

2. Procédé selon la revendication 1, dans lequel le système informatique comporte un serveur (SERV-2) dans lequel sont connectés un proxy virtuel, dit « proxy destination » (PR-D), et un hôte, dit « hôte destination » (CE-D), ainsi qu'également une passerelle (PE-G) connectée au réseau local, ledit procédé comportant en outre, avant l'exécution dudit ensemble d'étapes, des étapes de :
- réception (F20), en provenance de ladite passerelle, d'un message d'annonce (MESS-PE-G) comportant un identifiant, dit « identifiant tunnel » (Tunnel-ID), ainsi que les routes accessibles, au moyen dudit identifiant tunnel et dans le réseau privé, via une adresse IP (PE-G NH@) de ladite passerelle,
- mémorisation (F30) desdites routes annoncées en association avec l'identifiant (VPN-ID) dudit réseau privé, ledit identifiant tunnel et ladite adresse IP de la passerelle,
ledit ensemble d'étapes associé à l'hôte destination comportant également des étapes de :
- transmission (F80) de l'identifiant tunnel à un système de gestion de virtualisation (SGV) appartenant au système informatique,
- transmission (F220) à ladite passerelle d'un message d'annonce (MESS2-RR) comportant les routes accessibles, au moyen dudit identifiant tunnel et dans le réseau privé, via ladite adresse de saut,

3. Procédé selon l'une quelconque des revendications 1 et 2, dans lequel le système informatique comporte un serveur (SERV-1) dans lequel sont connectés un proxy virtuel, dit « proxy source » (PR-S), et un hôte, dit « hôte source » (CE-S), ainsi qu'également une passerelle (PE-G) connectée au réseau local, ledit procédé comportant en outre, avant l'exécution dudit ensemble d'étapes, des étapes de :
- réception (H20), en provenance de ladite passerelle, d'un message d'annonce (MESS-PE-G) comportant un identifiant, dit « identifiant tunnel » (Tunnel-ID), ainsi que les routes accessibles, au moyen dudit identifiant tunnel et dans le réseau privé, via une adresse IP (PE-G NH@) de ladite passerelle,
- mémorisation (H30) desdites routes annoncées en association avec l'identifiant (VPN-ID) dudit réseau privé, ledit identifiant tunnel et ladite adresse IP de la passerelle,
ledit ensemble d'étapes associé à l'hôte source comportant également des étapes de :
- transmission (H80) de l'identifiant tunnel à un système de gestion de virtualisation (SGV) appartenant au système informatique,
- transmission (H220) à l'hôte source d'un message d'annonce (MESS3-RR) comportant les routes accessibles, dans le réseau privé, via l'adresse IP de la passerelle.

4. Procédé de communication selon l'une quelconque des revendications 1 à 3, dans lequel le système informatique comporte un premier serveur (SERV-1) dans lequel sont connectés un proxy virtuel, dit « proxy source » (PR-S) et un hôte, dit « hôte source » (CE-S), ainsi qu'un deuxième serveur (SERV-2) dans lequel sont connectés un proxy virtuel, dit « proxy destination » (PR-D), et un hôte, dit « hôte destination » (CE-D), lesdits proxys source et destination étant rattachés à un même réseau privé virtuel de communication, ledit procédé comportant une exécution dudit ensemble d'étapes pour chacun des hôtes desdits serveurs, et, après que ledit ensemble d'étapes ait été exécuté pour l'hôte destination, une étape de transmission (E190) à l'hôte source d'un message d'annonce (MESS1-RR) comportant les routes accessibles via l'adresse de saut de l'hôte destination.

5. Procédé de communication mis en œuvre par un hôte (CE-S, CE-D) appartenant à un système informatique (SI) implémentant un réseau local virtuel de commutation (VLAN), ledit système informatique comportant en outre un réflecteur de routes (RR) connecté audit réseau local, un serveur (SERV-1, SERV-2) dans lequel sont connectés un proxy virtuel de commutation multiprotocole avec étiquette (PR-S, PR-D) et ledit hôte, ledit proxy virtuel étant connecté au réseau local ainsi que rattaché à un réseau privé virtuel de communication, ledit procédé comportant des étapes de :
- transmission gratuite (E100, F130, H130) au proxy d'une notification (NOTIF-D) comportant une adresse matérielle (CE-S MAC@, CE-D MAC@) de l'hôte ainsi qu'adresse IP de l'hôte, dite « adresse de saut » (CE-S NH@, CE-D NH@), associée à ladite adresse matérielle,
- transmission (E160, F190, H190) au réflecteur de routes d'un message d'annonce (MESS-D) comportant les routes accessibles via ladite adresse saut.

6. Procédé selon la revendication 5, dans lequel le système informatique comporte un serveur (SERV-1) dans lequel sont connectés un proxy virtuel, dit « proxy source » (PR-S), et un hôte, dit « hôte source » (CE-S), ainsi qu'également une passerelle (PE-G) connectée au réseau local, ledit procédé étant mis en œuvre par ledit hôte source et comportant en outre une étape de réception (H230), en provenance du réflecteur de routes, d'un message d'annonce (MESS3-RR) comportant les routes accessibles, dans le réseau privé, via l'adresse IP de la passerelle.

7. Procédé selon l'une quelconque des revendications 4 et 5, dans lequel le système informatique comporte un premier serveur (SERV-1) dans lequel sont connectés un proxy virtuel, dit « proxy source » (PR-S) et un hôte, dit « hôte source » (CE-S), ainsi qu'un deuxième serveur (SERV-2) dans lequel sont connectés un proxy virtuel, dit « proxy destination » (PR-D), et un hôte, dit « hôte destination » (CE-D), lesdits proxys source et destination étant rattachés à un même réseau privé virtuel de communication, ledit procédé étant mis en œuvre par ledit hôte source et comportant une étape de réception, en provenance du réflecteur de routes, d'un message d'annonce comportant les routes accessibles via l'adi-esse de saut de l'hôte destination.

8. Programme d'ordinateur (PROG-RR, PROG-S, PROG-D) comportant des instructions pour la mise en œuvre d'un procédé selon l'une quelconque des revendications 1 à 7 lorsque ledit programme est exécuté par un ordinateur.

9. Support d'enregistrement lisible par un ordinateur sur lequel est enregistré un programme d'ordinateur selon la revendication 8.

10. Réflecteur de routes (RR) comportant des moyens configurés pour mettre en œuvre un procédé de communication selon l'une quelconque des revendications 1 à 4.

11. Hôte (CE-S, CE-D) comportant des moyens configurés pour mettre en œuvre un procédé selon l'une quelconques des revendications 5 à 7.

12. Système informatique (SI) comportant un réflecteur de routes (RR) selon la revendication 10 et au moins un serveur (SERV-1, SERV-2) dans lequel sont connectés un proxy virtuel de commutation multiprotocole avec étiquette (PR-S, PR-D) et un hôte (CE-S, CE-D) selon la revendication 11.

## Patentansprüche

1. Kommunikationsverfahren, das von einem Routenreflektor (RR) implementiert wird, der zu einem Computersystem (SI) gehört, das ein virtuelles lokales Vermittlungsnetzwerk (VLAN) verwirklicht, mit dem der Routenreflektor verbunden ist, wobei das Computersystem außerdem mindestens einen Server (SERV-1, SERV-2) umfasst, in dem ein virtueller Multiprotocol-Label-Switching-Proxy (PR-S, PR-D) und ein Host (CE-S, CE-D) verbunden sind, wobei der virtuelle Proxy mit dem lokalen Netzwerk verbunden ist und auch an ein virtuelles privates Kommunikationsnetzwerk angeschlossen ist, wobei das Verfahren für jeden Host eines Servers eine Reihe von Schritten umfasst von:
- Speichern (E40, F70, H70) einer Kennung (VPN-ID) des privaten Netzwerks in Verbindung mit einer Hardware-Adresse (CE-S MAC@, CE-D MAC@) des Hosts,
- Empfangen (E120, F150, H150), von dem mit dem Host verbundenen Proxy, eine Benachrichtigung (NOTIF-D), die eine IP-Adresse des Hosts enthält, genannt "Sprungadresse" (CE-S NH@, CE-D NH@), die mit der Hardware-Adresse verknüpft ist,
- wenn vor dem Empfang der Benachrichtigung eine oder mehrere andere IP-Adressen in Verbindung mit einer oder mehreren Hardware-Adressen von Hosts durch den Routenreflektor gespeichert wurden (E130, F160, H160), Überprüfen (E140, F170, H170) einer Übereinstimmung zwischen der Sprungadresse und der oder den anderen IP-Adressen,
- wenn das Überprüfen der Übereinstimmung negativ ist oder wenn durch den Routenreflektor vor Empfang der Benachrichtigung keine andere IP-Adresse gespeichert wurde, Speichern (E150, F180) der Sprungadresse in Verbindung mit der Hardware-Adresse des Hosts,
- Empfangen (E170, F200, H200), von dem Host, einer Ankündigungsnachricht (MESS-D), die die über die Sprungadresse zugänglichen Routen umfasst,
- Speichern (E180, F210, H210) der angekündigten Routen in Verbindung mit der Kennung des privaten Netzwerks, der Hardware-Adresse des Hosts und der Sprungadresse.

2. Verfahren nach Anspruch 1, wobei das Computersystem einen Server (SERV-2) umfasst, in dem ein virtueller Proxy, genannt "Zielproxy" (PR-D), und ein Host, genannt "Zielhost" (CE-D), sowie auch ein Gateway (PE-G), das mit dem lokalen Netzwerk verbunden ist, verbunden sind, wobei das Verfahren ferner vor der Ausführung der Reihe von Schritten Schritte umfasst von:
- Empfangen (F20), von dem Gateway, einer Ankündigungsnachricht (MESS-PE-G), die eine Kennung, genannt "Tunnelkennung" (Tunnel-ID), sowie die Routen, die mittels der Tunnelkennung und in dem privaten Netzwerk via eine IP-Adresse (PE-G NH@) des Gateways zugänglich sind, umfasst,
- Speichern (F30) der angekündigten Routen in Verbindung mit der Kennung (VPN-ID) des privaten Netzwerks, der Tunnelkennung und der IP-Adresse des Gateways,
wobei die Reihe von Schritten, die mit dem Zielhost verknüpft ist, ferner Schritte umfasst von:
- Übertragen (F80) der Tunnelkennung an ein Virtualisierungsmanagementsystem (SGV), das zum Computersystem gehört,
- Übertragen (F220), an das Gateway, einer Ankündigungsnachricht (MESS2-RR), die die Routen umfasst, die mittels der Tunnelkennung und in dem privaten Netzwerk via die Sprungadresse zugänglich sind.

3. Verfahren nach einem der Ansprüche 1 und 2, wobei das Computersystem einen Server (SERV-1) umfasst, in dem ein virtueller Proxy, genannt "Quellenproxy" (PR-S), und einen Host, genannt "Quellenhost" (CE-S), sowie auch ein Gateway (PE-G), das mit dem lokalen Netzwerk verbunden ist, verbunden sind, wobei das Verfahren ferner vor der Ausführung der Reihe von Schritten Schritte umfasst von:
- Empfangen (H20), von dem Gateway, einer Ankündigungsnachricht (MESS-PE-G), die eine Kennung, genannt "Tunnelkennung" (Tunnel-ID), sowie die Routen, die mittels der Tunnelkennung und in dem privaten Netzwerk via eine IP-Adresse (PE-G NH@) des Gateways zugänglich sind, umfasst,
- Speichern (H30) der angekündigten Routen in Verbindung mit der Kennung (VPN-ID) des privaten Netzwerks, der Tunnelkennung und der IP-Adresse des Gateways,
wobei die Reihe von Schritten, die mit dem Quellenhost verknüpft ist, ferner Schritte umfasst von:
- Übertragen (H80) der Tunnelkennung an ein Virtualisierungsmanagementsystem (SGV), das zum Computersystem gehört,
- Übertragen (H220), an den Quellenhost, einer Ankündigungsnachricht (MESS3-RR), die die Routen umfasst, die in dem privaten Netzwerk via die IP-Adresse des Gateways zugänglich sind.

4. Kommunikationsverfahren nach einem der Ansprüche 1 bis 3, wobei das Computersystem einen ersten Server (SERV-1), in dem ein virtueller Proxy, genannt "Quellenproxy" (PR-S), und ein Host, genannt "Quellenhost" (CE-S), verbunden sind, sowie einen zweiten Server (SERV-2), in dem ein virtueller Proxy, genannt "Zielproxy" (PR-D), und ein Host, genannt "Zielhost" (CE-D), verbunden sind, umfasst, wobei der Quellen- und der Zielproxy an ein und dasselbe virtuelle private Kommunikationsnetzwerk angeschlossen sind, wobei das Verfahren eine Ausführung der Reihe von Schritten für jeden der Hosts der Server und, nachdem die Reihe von Schritten für den Zielhost ausgeführt wurde, einen Schritt des Übertragens (E190), an den Quellenhost, einer Ankündigungsnachricht (MESS1-RR) umfasst, die die via die Sprungdresse des Zielhosts zugänglichen Routen umfasst.

5. Kommunikationsverfahren, das von einem Host (CE-S, CE-D) implementiert wird, der zu einem Computersystem (SI) gehört, das ein virtuelles lokales Vermittlungsnetzwerk (VLAN) verwirklicht, wobei das Computersystem ferner einen mit dem lokalen Netzwerk verbundenen Routenreflektor (RR), einen Server (SERV-1, SERV-2), in dem ein virtueller Multiprotocol-Label-Switching-Proxy (PR-S, PR-D) und der Host verbunden sind, umfasst, wobei der virtuelle Proxy mit dem lokalen Netzwerk verbunden ist und auch an ein virtuelles privates Kommunikationsnetzwerk angeschlossen ist, wobei das Verfahren Schritte umfasst von:
- unaufgefordertes Übertragen (E100, F130, H130), an den Proxy, einer Benachrichtigung (NOTIF-D), die eine Hardware-Adresse (CE-S MAC@, CE-D MAC@) des Hosts sowie eine IP-Adresse des Hosts, genannt "Sprungadresse" (CE-S NH@, CE-D NH@), die mit der Hardware-Adresse verknüpft ist, umfasst,
- Übertragen (E160, F190, H190), an den Routenreflektor, einer Ankündigungsnachricht (MESS-D), die die via die Sprungadresse zugänglichen Routen umfasst.

6. Verfahren nach Anspruch 5, wobei das Computersystem einen Server (SERV-1) umfasst, in dem ein virtueller Proxy, genannt "Quellenproxy" (PR-S), und ein Host, genannt "Quellenhost" (CE-S), sowie auch ein Gateway (PE-G), das mit dem lokalen Netzwerk verbunden ist, verbunden sind, wobei das Verfahren von dem Quellenhost implementiert wird und ferner einen Schritt des Empfangens (H230), von dem Routenreflektor, einer Ankündigungsnachricht (MESS3-RR) umfasst, die die in dem privaten Netzwerk via die IP-Adresse des Gateways zugänglichen Routen umfasst.

7. Verfahren nach einem der Ansprüche 4 und 5, wobei das Computersystem einen ersten Server (SERV-1), in dem ein virtueller Proxy, genannt "Quellenproxy" (PR-S) und ein Host, genannt "Quellenhost" (CE-S), verbunden sind, sowie einen zweiten Server (SERV-2), in dem ein virtueller Proxy, genannt "Zielproxy" (PR-D), und ein Host, genannt "Zielhost" (CE-D), verbunden sind, umfasst, wobei der Quellen- und der Zielproxy an ein und dasselbe virtuelle private Kommunikationsnetzwerk angeschlossen sind, wobei das Verfahren von dem Quellenhost implementiert wird und einen Schritt des Empfangens, von dem Routenreflektor, einer Ankündigungsnachricht umfasst, die die via die Sprungadresse des Zielhosts zugänglichen Routen umfasst.

8. Computerprogramm (PROG-RR, PROG-S, PROG-D), das Anweisungen umfasst, die bei Ausführung des Programms durch einen Computer ein Verfahren nach einem der Ansprüche 1 bis 7 implementieren.

9. Computerlesbares Speichermedium, auf dem ein Computerprogramm nach Anspruch 8 gespeichert ist.

10. Routenreflektor (RR), der Mittel umfasst, die konfiguriert sind, um ein Kommunikationsverfahren nach einem der Ansprüche 1 bis 4 zu implementieren.

11. Host (CE-S, CE-D), der Mittel umfasst, die konfiguriert sind, um ein Verfahren nach einem der Ansprüche 5 bis 7 zu implementieren.

12. Computersystem (SI), umfassend einen Routenreflektor (RR) nach Anspruch 10 und mindestens einen Server (SERV-1, SERV-2), in dem ein virtueller Multiprotocol-Label-Switching-Proxy (PR-S, PR-D) und ein Host (CE-S, CE-D) nach Anspruch 11 verbunden sind.

## Claims

1. Communication method implemented by a route reflector (RR) belonging to a computer system (SI) implementing a virtual local area switching network (VLAN) to which said route reflector is connected, said computer system further comprising at least one server (SERV-1, SERV-2) in which are connected a multiprotocol label switching virtual proxy (PR-S, PR-D) and a host (CE-S, CE-D), said virtual proxy being connected to the local area network and attached to a virtual private communication network, said method comprising, for each host of a server, a set of steps of:
- storage (E40, F70, H70) of an identifier (VPN-ID) of said private network in association with a hardware address (CE-S MAC@, CE-D MAC@) of the host,
- reception (E120, F150, H150), from the proxy connected to said host, of a notification (NOTIF-D) containing an IP address of the host, called the "hop address" (CE-S NH@, CE-D NH@), associated with said hardware address,
- if, prior to reception of said notification, one or more other IP addresses have been stored (E130, F160, H160) in association with one or more hardware addresses of hosts by the route reflector, verification (E140, F170, H170) of a correspondence between said hop address and said one or more other IP addresses,
- if the correspondence verification is negative or if no other IP address has been stored by the route reflector prior to reception of said notification, storage (E150, F180) of the said hop address in association with the hardware address of the host,
- reception (E170, F200, H200), from the host, of an advertisement message (MESS-D) containing the routes accessible via said hop address,
- storage (E180, F210, H210) of said advertised routes in association with the identifier of said private network, the hardware address of the host and said hop address.

2. Method according to Claim 1, wherein the computer system comprises a server (SERV-2) in which are connected a virtual proxy, called the "destination proxy" (PR-D), and a host, called the "destination host" (CE-D), and also a gateway (PE-G) connected to the local area network, said method further comprising, prior to execution of said set of steps, steps of:
- reception (F20), from said gateway, of an advertisement message (MESS-PE-G) containing an identifier, called the "tunnel identifier" (Tunnel-ID), and the routes accessible, by means of said tunnel identifier and in the private network, via an IP address (PE-G NH@) of said gateway,
- storage (F30) of said advertised routes in association with the identifier (VPN-ID) of said private network, said tunnel identifier and said IP address of the gateway,
said set of steps associated with the destination host also comprising steps of:
- transmission (F80) of the tunnel identifier to a virtualization management system (SGV) belonging to the computer system,
- transmission (F220) to said gateway of an advertisement message (MESS2-RR) containing the routes accessible, by means of said tunnel identifier and in the private network, via said hop address.

3. Method according to either of Claims 1 and 2, wherein the computer system comprises a server (SERV-1) in which are connected a virtual proxy, called the "source proxy" (PR-S), and a host, called the "source host" (CE-S), and also a gateway (PE-G) connected to the local area network, said method further comprising, prior to execution of said set of steps, steps of:
- reception (H20), from said gateway, of an advertisement message (MESS-PE-G) containing an identifier, called the "tunnel identifier" (Tunnel-ID), and the routes accessible, by means of said tunnel identifier and in the private network, via an IP address (PE-G NH@) of said gateway,
- storage (H30) of said advertised routes in association with the identifier (VPN-ID) of said private network, said tunnel identifier and said IP address of the gateway,
said set of steps associated with the source host also comprising steps of:
- transmission (H80) of the tunnel identifier to a virtualization management system (SGV) belonging to the computer system,
- transmission (H220) to the source host of an advertisement message (MESS3-RR) containing the routes accessible, in the private network, via the IP address of the gateway.

4. Communication method according to any of Claims 1 to 3, wherein the computer system comprises a first server (SERV-1) in which are connected a virtual proxy, called the "source proxy" (PR-S) and a host, called the "source host" (CE-S), and a second server (SERV-2) in which are connected a virtual proxy, called the "destination proxy" (PR-D), and a host, called the "destination host" (CE-D), said source and destination proxies being attached to the same virtual private communication network, said method comprising execution of said set of steps for each of the hosts of said servers, and, after said set of steps has been executed for the destination host, a step of transmission (E190) to the source host of an advertisement message (MESS1-RR) containing the routes accessible via the hop address of the destination host.

5. Communication method implemented by a host (CE-S, CE-D) belonging to a computer system (SI) implementing a virtual local area switching network (VLAN), said computer system further comprising a route reflector (RR) connected to said local area network, a server (SERV-1, SERV-2) in which are connected a multiprotocol label switching virtual proxy (PR-S, PR-D) and said host, said virtual proxy being connected to the local area network and attached to a virtual private communication network, said method comprising steps of:
- free transmission (E100, F130, H130) to the proxy of a notification (NOTIF-D) containing a hardware address (CE-S MAC@, CE-D MAC@) of the host and the IP address of the host, called the "hop address" (CE-S NH@, CE-D NH@), associated with said hardware address,
- transmission (E160, F190, H190) to the route reflector of an advertisement message (MESS-D) containing the routes accessible via said hop address.

6. Method according to Claim 5, wherein the computer system comprises a server (SERV-1) in which are connected a virtual proxy, called the "source proxy" (PR-S), and a host, called the "source host" (CE-S), and also a gateway (PE-G) connected to the local area network, said method being implemented by said source host and further comprising a step of reception (H230), from the route reflector, of an advertisement message (MESS3-RR) containing the routes accessible, in the private network, via the IP address of the gateway.

7. Communication method according to either of Claims 4 and 5, wherein the computer system comprises a first server (SERV-1) in which are connected a virtual proxy, called the "source proxy" (PR-S) and a host, called the "source host" (CE-S), and a second server (SERV-2) in which are connected a virtual proxy, called the "destination proxy" (PR-D), and a host, called the "destination host" (CE-D), said source and destination proxies being attached to the same virtual private communication network, said method being implemented by said source host and comprising a step of reception, from the route reflector, of an advertisement message containing the routes accessible via the hop address of the destination host.

8. Computer program (PROG-RR, PROG-S, PROG-D) comprising instructions for implementing a method according to any of Claims 1 to 7 when said program is executed by a computer.

9. Computer-readable recording medium on which a computer program according to Claim 8 is recorded.

10. Route reflector (RR) comprising means configured to implement a communication method according to any of Claims 1 to 4.

11. Host (CE-S, CE-D) comprising means configured to implement a method according to any of Claims 5 to 7.

12. Computer system (SI) comprising a route reflector (RR) according to Claim 10 and at least one server (SERV-1, SERV-2) in which are connected a multiprotocol label switching virtual proxy (PR-S, PR-D) and a host (CE-S, CE-D) according to Claim 11.
